# EUROPEAN PATENT SPECIFICATION

(11) **EP 3 614 783 B1**
(45) Date of publication and mention of the grant of the patent: **16.04.2025**
(21) Application number: 19203338.9
(22) Date of filing: 30.09.2015
(51) Int. Cl.: H04W 74/0816, H04L 5/00, H04L 69/22, H04B 7/0452, H04L 61/5069, H04W 4/06, H04L 101/622

(54) **METHODS AND APPARATUS FOR MULTIPLE USER COMMUNICATIONS IN WIRELESS NETWORKS**
VERFAHREN UND VORRICHTUNG ZUR MEHRBENUTZERKOMMUNIKATION IN DRAHTLOSEN NETZWERKEN
PROCÉDÉS ET APPAREIL POUR DE MULTIPLES COMMUNICATIONS D'UTILISATEUR DANS DES RÉSEAUX SANS FIL

(30) Priority: 29.10.2014 US 201462072369 P; 29.09.2015 US 201514869540
(43) Date of publication of application: 26.02.2020
(62) Divisional of application: 15781006.0
(73) Proprietor: Qualcomm Incorporated, San Diego, CA 92121-1714 (US)
(72) Inventor: WENTINK, Maarten Menzo, San Diego, California 92121-1714 (US); MERLIN, Simone, San Diego, California 92121-1714 (US)
(74) Representative: Wimmer, Hubert

(56) References cited:
- WO-A1-2014/123358
- US-A1- 2014 119 288
- US-A1- 2015 382 342
- US-B2- 8 553 714

## Description

### FIELD

Certain aspects of the present disclosure generally relate to wireless communications, and more particularly, to a method for wireless communication performed by an access terminal and the access terminal itself.

### BACKGROUND

In many telecommunication systems, communications networks are used to exchange messages among several interacting spatially-separated devices. Networks may be classified according to geographic scope, which could be, for example, a metropolitan area, a local area, or a personal area. Such networks may be designated respectively as a wide area network (WAN), metropolitan area network (MAN), local area network (LAN), or personal area network (PAN). Networks also differ according to the switching, routing technique used to interconnect the various network nodes and devices (e.g., circuit switching vs. packet switching), the type of physical media employed for transmission (e.g., wired vs. wireless), and the set of communication protocols used (e.g., Internet protocol suite, Synchronous Optical Networking (SONET), Ethernet, etc.).

Wireless networks are often preferred when the network elements are mobile and thus have dynamic connectivity needs, or if the network architecture is formed in an ad hoc, rather than fixed, topology. Wireless networks employ intangible physical media in an unguided propagation mode using electromagnetic waves in the radio, microwave, infra-red, optical, etc. frequency bands. Wireless networks advantageously facilitate user mobility and rapid field deployment when compared to fixed wired networks.

In order to address the issue of increasing bandwidth requirements that are demanded for wireless communications systems, different schemes are being developed to allow multiple access terminals to communicate with a single access point by sharing the channel resources while achieving high data throughputs. With limited communication resources, it is desirable to reduce the amount of traffic passing between the access point and the multiple terminals. For example, when multiple terminals send uplink communications to the access point, it is desirable to minimize the amount of traffic to complete the uplink of all transmissions. Thus, there is a need for improved methods and apparatuses for multiple user communications in wireless networks.

Attention is drawn to document WO 2014/123358 A1 which relates to a method for transmitting an uplink in a WLAN which comprises the steps of: a first STA transmitting to an AP each of a plurality of RTS frames through at least one channel from among a plurality of first channels; the first STA receiving from the AP at least one CTS frame through at least one channel from among the plurality of channels which have received the RTS frames; and a second STA receiving from the AP at least one CTS frame through at least one channel from among a plurality of second channels, wherein the at least one CTS frame includes STA identifier information and channel information, the STA identifier information includes information for indicating the first STA and the second STA, and wherein the channel information may include information on a first uplink channel allocated for transmitting a first data frame of the first STA and information on a second uplink channel allocated for transmitting a second data frame of the second STA.

Further attention is drawn to document US 2014/0119288 A1 which relates wireless communication in a wireless network which comprises a wireless station obtaining a transmission opportunity period (TXOP) for communicating with an access point (AP) over a wireless communication channel. The wireless station sends an announcement to the AP to share the transmission opportunity period with at least another wireless station, as a multi-user transmission opportunity period for simultaneously transmitting data from said wireless stations to the AP on multiple uplink (UL) spatial streams over the wireless channel.

### SUMMARY

The invention is defined by the appended independent claims.

Further embodiments of the invention are defined by the dependent claims.

### BRIEF DESCRIPTION OF THE DRAWINGS

FIG. 1 illustrates a multiple-access multiple-input multiple-output (MIMO) system with access points and access terminals useful for understanding the invention.
FIG. 2 illustrates a block diagram of the access point and two access terminals in the MIMO system of FIG. 1 useful for understanding the invention.
FIG. 3 illustrates various components that may be utilized in a wireless device that may be employed within the MIMO system of FIG. 1 useful for understanding the invention.
FIG. 4A is a time sequence diagram illustrating an example of an UL-MU-MIMO protocol that may be used for UL communications, in accordance with some aspects of the invention.
FIG. 4B is a time sequence diagram illustrating an example of another UL-MU-MIMO protocol that may be used for UL communications, in accordance with some aspects of the invention.
FIG. 5 is a time sequence diagram that, in conjunction with FIG. 1, illustrates an operation mode of a UL-MU-MIMO transmission, in accordance with some aspects of the invention.
FIG. 6 is a time sequence diagram that, in conjunction with FIG. 1, illustrates another operation mode of a UL-MU-MIMO transmission, in accordance with some aspects of the invention.
FIG. 7 is a time sequence diagram illustrating, in conjunction with FIG. 1, initializing a UL-MU-MIMO utilizing a request to transmit (RTX) message, useful for understanding the invention.
FIG. 8 is a message timing diagram of multi-user uplink communication, in accordance with some aspects of the invention.
FIG. 9 is a diagram of a RTX message, useful for understanding the invention.
FIG. 10 is a diagram of a clear to transmit (CTX) message, in accordance with some aspects of the invention.
FIG. 11 is another diagram of a CTX message, in accordance with some aspects of the invention.
FIG. 12 is another diagram of a CTX message, in accordance with some aspects of the invention.
FIG. 13 is another diagram of a CTX message, in accordance with some aspects of the invention.
FIG. 14 is another diagram of a CTX message, in accordance with some aspects of the invention.
FIG. 15 is another diagram of a unicast CTX message, in accordance with some aspects of the invention.
FIG. 16 is a diagram of a Multi-User (MU) PPDU comprising an MPDU including the unicast CTX message of FIG. 15, in accordance with some aspects of the invention.
FIG. 17 is a diagram of high efficiency signal fields of a null data packet (NDP) CTX message, in accordance with some aspects of the invention.
FIG. 18 is a diagram of a unicast NDP CTX message, in accordance with some aspects of the invention.
FIG. 19 is another diagram of a NDP CTX message, in accordance with some aspects of the invention.
FIG. 20 is a flowchart of a method for providing wireless communication useful for understanding the invention.

### DETAILED DESCRIPTION

Various aspects of the novel systems, apparatuses, and methods are described more fully hereinafter with reference to the accompanying drawings. The disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the novel systems, apparatuses, and methods disclosed herein, whether implemented independently of or combined with any other aspect of the application. For example, an apparatus may be implemented or a method may be practiced using any number of the aspects set forth herein. In addition, the scope of the application is intended to cover such an apparatus or method which is practiced using other structure, functionality, or structure and functionality in addition to or other than the various aspects set forth herein. It should be understood that any aspect disclosed herein may be embodied by one or more elements of a claim.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

Wireless network technologies may include various types of wireless local area networks (WLANs). A WLAN may be used to interconnect nearby devices together, employing widely used networking protocols. The various aspects described herein may apply to any communication standard, such as Wi-Fi or, more generally, any member of the IEEE 802.11 family of wireless protocols.

In some aspects, wireless messages may be transmitted according to a high-efficiency 802.11 protocol using orthogonal frequency division multiplexing (OFDM), direct-sequence spread spectrum (DSSS) communications, a combination of OFDM and DSSS communications, or other schemes. Aspects of the high-efficiency 802.11 protocol may be used for Internet access, sensors, metering, smart grid networks, or other wireless applications. Advantageously, aspects of certain devices implementing this particular wireless protocol may consume less power than devices implementing other wireless protocols, may be used to transmit wireless messages across short distances, and/or may be able to transmit messages less likely to be blocked by objects, such as humans.

In some aspects, a WLAN includes various devices which are the components that access the wireless network. For example, there may be two types of devices: access points ("APs") and clients (also referred to as access terminals, or "access terminals"). In general, an access point serves as a hub or base access terminal for the WLAN and an access terminal serves as a user of the WLAN. For example, an access terminal may be a laptop computer, a personal digital assistant (PDA), a mobile phone, etc. In an example, an access terminal connects to an access point via a Wi-Fi (e.g., IEEE 802.11 protocol such as 802.11ah) compliant wireless link to obtain general connectivity to the Internet or to other wide area networks. In some aspects an access terminal may also be used as an AP.

The techniques described herein may be used for various broadband wireless communication systems, including communication systems that are based on an orthogonal multiplexing scheme. Examples of such communication systems include Spatial Division Multiple Access (SDMA), Time Division Multiple Access (TDMA), Orthogonal Frequency Division Multiple Access (OFDMA) systems, Single-Carrier Frequency Division Multiple Access (SC-FDMA) systems, and so forth. An SDMA system may utilize sufficiently different directions to simultaneously transmit data belonging to multiple access terminals. A TDMA system may allow multiple access terminals to share the same frequency channel by dividing the transmission message into different time slots, each time slot being assigned to a different access terminal. A TDMA system may implement global system for moble communications (GSM) or some other standards known in the art. An OFDMA system utilizes orthogonal frequency division multiplexing (OFDM), which is a modulation technique that partitions the overall system bandwidth into multiple orthogonal sub-carriers. These sub-carriers may also be called tones, bins, etc. With OFDM, each sub-carrier may be independently modulated with data. An OFDM system may implement IEEE 802.11 or some other standards known in the art. An SC-FDMA system may utilize interleaved FDMA (IFDMA) to transmit on sub-carriers that are distributed across the system bandwidth, localized FDMA (LFDMA) to transmit on a block of adjacent sub-carriers, or enhanced FDMA (EFDMA) to transmit on multiple blocks of adjacent sub-carriers. In general, modulation symbols are sent in the frequency domain with OFDM and in the time domain with SC-FDMA. A SC-FDMA system may implement 3GPP-LTE (3rd Generation Partnership Project Long Term Evolution) or other standards.

The teachings herein may be incorporated into (e.g., implemented within or performed by) a variety of wired or wireless apparatuses (e.g., nodes). In some aspects, a wireless node implemented in accordance with the teachings herein may comprise an access point or an access terminal.

An access point ("AP") may comprise, be implemented as, or known as a NodeB, Radio Network Controller ("RNC"), eNodeB, Base Access terminal Controller ("BSC"), Base Transceiver Access terminal ("BTS"), Base Access terminal ("BS"), Transceiver Function ("TF"), Radio Router, Radio Transceiver, Basic Service Set ("BSS"), Extended Service Set ("ESS"), Radio Base Access terminal ("RBS"), or some other terminology.

An access terminal "access terminal" may also comprise, be implemented as, or known as an access terminal ("AT"), a subscriber access terminal, a subscriber unit, a mobile access terminal, a remote access terminal, a remote terminal, a user agent, a user device, user equipment, a user terminal or some other terminology, such as device, or plurality of devices. In some aspects an access terminal may comprise a cellular telephone, a cordless telephone, a Session Initiation Protocol ("SIP") phone, a wireless local loop ("WLL") access terminal, a personal digital assistant ("PDA"), a handheld device having wireless connection capability, a station (STA) or some other suitable processing device connected to a wireless modem. Accordingly, one or more aspects taught herein may be incorporated into a phone (e.g., a cellular phone or smartphone), a computer (e.g., a laptop), a portable communication device, a headset, a portable computing device (e.g., a personal data assistant), an entertainment device (e.g., a music or video device, or a satellite radio), a gaming device or system, a global positioning system device, or any other suitable device that is configured to communicate via a wireless medium.

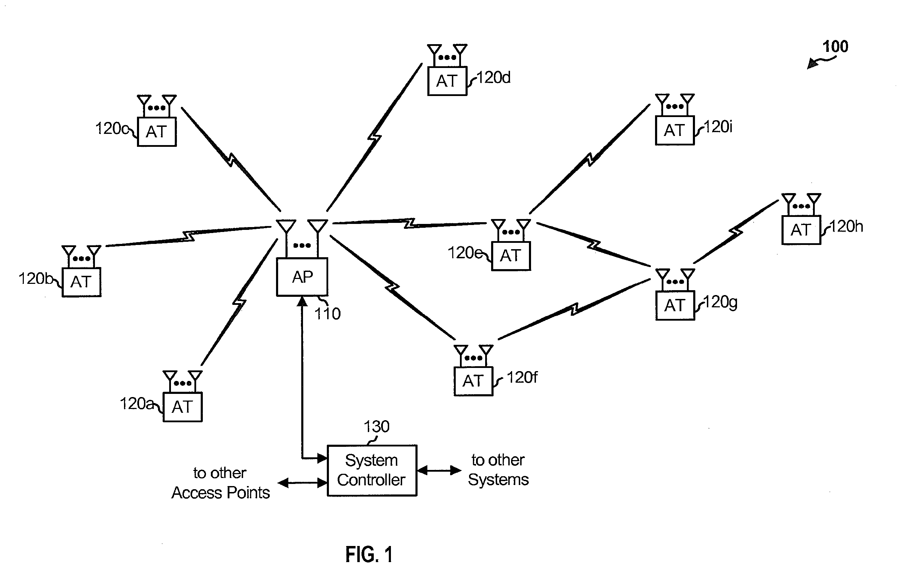

FIG. 1 illustrates a multiple-access multiple-input multiple-output (MIMO) system 100 with access points and access terminals useful for understanding the invention. For simplicity, only one access point 110 is shown in FIG. 1. An access point is generally a fixed access terminal that communicates with the access terminals and may also be referred to as a base access terminal or using some other terminology. An access terminal or access terminal may be fixed or mobile and may also be referred to as a mobile access terminal or a wireless device, or using some other terminology. The access point 110 may communicate with one or more access terminals 120A, 120B, 120C, 120d, 120e, 120f, 120g, 120h, 120i (hereinafter access terminal 120 or, when referring to more than one, access terminals 120) at any given moment on the downlink and uplink. The downlink (i.e., forward link) is the communication link from the access point to the access terminals, and the uplink (i.e., reverse link) is the communication link from the access terminals to the access point. An access terminal may also communicate peer-to-peer with another access terminal. A system controller 130 couples to and provides coordination and control for the access points.

While portions of the following disclosure will describe access terminals 120 capable of communicating via Spatial Division Multiple Access (SDMA), for certain aspects, the access terminals 120 may also include some access terminals that do not support SDMA. Thus, for such aspects, the access point 110 may be configured to communicate with both SDMA and non-SDMA access terminals. This approach may conveniently allow older versions of access terminals ("legacy" access terminals) that do not support SDMA to remain deployed in an enterprise, extending their useful lifetime, while allowing newer SDMA access terminals to be introduced as deemed appropriate.

The system 100 employs multiple transmit and multiple receive antennas for data transmission on the downlink and uplink. The access point 110 is equipped with *N*ₐₚ antennas and represents the multiple-input (MI) for downlink transmissions and the multiple-output (MO) for uplink transmissions. A set of K selected access terminals 120 collectively represents the multiple-output for downlink transmissions and the multiple-input for uplink transmissions. For pure SDMA, it is desired to have *N*ₐₚ ≤ *K* ≤ 1 if the data symbol streams for the K access terminals are not multiplexed in code, frequency or time by some means. K may be greater than *N*ₐₚ if the data symbol streams can be multiplexed using TDMA technique, different code channels with CDMA, disjoint sets of sub-bands with OFDM, and so on. Each selected access terminal may transmit user-specific data to and/or receive user-specific data from the access point. In general, each selected access terminal may be equipped with one or multiple antennas (i.e., N_{*u*t} ≥ 1). The K selected access terminals can have the same number of antennas, or one or more access terminals may have a different number of antennas.

The system 100 may be a time division duplex (TDD) system or a frequency division duplex (FDD) system. For a TDD system, the downlink and uplink share the same frequency band. For an FDD system, the downlink and uplink use different frequency bands. The system 100 may also utilize a single carrier or multiple carriers for transmission. Each access terminal may be equipped with a single antenna (e.g., in order to keep costs down) or multiple antennas (e.g., where the additional cost can be supported). The system 100 may also be a TDMA system if the access terminals 120 share the same frequency channel by dividing transmission, reception into different time slots, where each time slot may be assigned to a different access terminal 120.

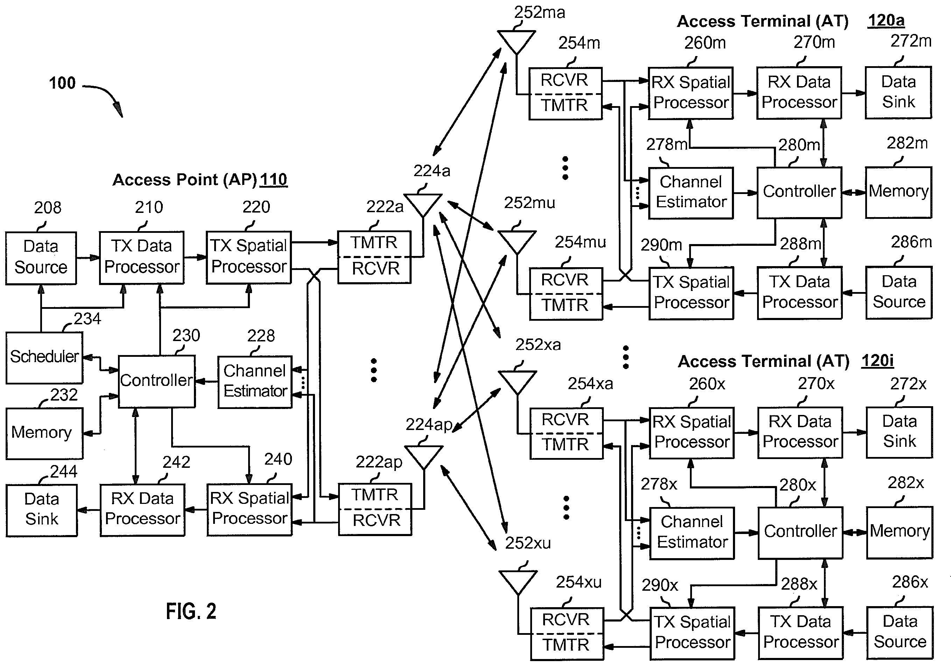

FIG. 2 illustrates a block diagram of the access point 110 and two access terminals 120A and 120i in system 100 which is useful for understanding the invention. The access point 110 is equipped with Nₜ antennas 224a through 224ap. The access terminal 120A is equipped with N_{ut,m} antennas 252ₘₐ through 252ₘᵤ, and the access terminal 120i is equipped with N_{ut,x} antennas 252ₓₐ through 252ₓᵤ. The access point 110 is a transmitting entity for the downlink and a receiving entity for the uplink. The access terminal 120 is a transmitting entity for the uplink and a receiving entity for the downlink. As used herein, a "transmitting entity" is an independently operated apparatus or device capable of transmitting data via a wireless channel, and a "receiving entity" is an independently operated apparatus or device capable of receiving data via a wireless channel. In the following description, the subscript "dn" denotes the downlink, the subscript "up" denotes the uplink, Nᵤₚ access terminals are selected for simultaneous transmission on the uplink, and N_{dn} access terminals are selected for simultaneous transmission on the downlink. Nᵤₚ may or may not be equal to N_{dn}, and Nᵤₚ and N_{dn} may be static values or may change for each scheduling interval. Beam-steering or some other spatial processing technique may be used at the access point 110 and/or the access terminal 120.

On the uplink, at each access terminal 120 selected for uplink transmission, a TX data processor 288 receives traffic data from a data source 286 and control data from a controller 280. The TX data processor 288 processes (e.g., encodes, interleaves, and modulates) the traffic data for the access terminal based on the coding and modulation schemes associated with the rate selected for the access terminal and provides a data symbol stream. A TX spatial processor 290 performs spatial processing on the data symbol stream and provides N_{ut,m} transmit symbol streams for the N_{ut,m} antennas. Each transmitter (TMTR) unit 254 receives and processes (e.g., converts to analog, amplifies, filters, and frequency upconverts) a respective transmit symbol stream to generate an uplink message. N_{ut,m} transmitters within respective transceiver units 254 provide N_{ut,m} uplink messages for transmission from N_{ut,m} antennas 252, for example to transmit to the access point 110.

Nᵤₚ access terminals may be scheduled for simultaneous transmission on the uplink. Each of these access terminals may perform spatial processing on its respective data symbol stream and transmit its respective set of transmit symbol streams on the uplink to the access point 110.

At the access point 110, Nᵤₚ antennas 224a through 224ₐₚ receive the uplink messages from all Nᵤₚ access terminals transmitting on the uplink. Each antenna 224 provides a received message to a respective receiver (RCVR) unit within a transceiver unit 222. Each transceiver unit 222 performs processing complementary to that performed by a transceiver unit 254 and provides a received symbol stream. An RX spatial processor 240 performs receiver spatial processing on the Nᵤₚ received symbol streams from Nᵤₚ receiver units within the respective transceiver units 222 and provides Nᵤₚ recovered uplink data symbol streams. The receiver spatial processing may be performed in accordance with the channel correlation matrix inversion (CCMI), minimum mean square error (MMSE), soft interference cancellation (SIC), or some other technique. Each recovered uplink data symbol stream is an estimate of a data symbol stream transmitted by a respective access terminal. An RX data processor 242 processes (e.g., demodulates, deinterleaves, and decodes) each recovered uplink data symbol stream in accordance with the rate used for that stream to obtain decoded data. The decoded data for each access terminal may be provided to a data sink 244 for storage and/or a controller 230 for further processing.

On the downlink, at the access point 110, a TX data processor 210 receives traffic data from a data source 208 for N_{dn} access terminals scheduled for downlink transmission, control data from a controller 230, and possibly other data from a scheduler 234. The various types of data may be sent on different transport channels. TX data processor 210 processes (e.g., encodes, interleaves, and modulates) the traffic data for each access terminal based on the rate selected for that access terminal. The TX data processor 210 provides N_{dn} downlink data symbol streams for the N_{dn} access terminals. A TX spatial processor 220 performs spatial processing (such as a precoding or beamforming) on the N_{dn} downlink data symbol streams, and provides Nᵤₚ transmit symbol streams for the Nᵤₚ antennas. Each transceiver unit 222 receives and processes a respective transmit symbol stream to generate a downlink message. Nᵤₚ transmitters within the respective transceiver units 222 may provide Nᵤₚ downlink messages for transmission from Nᵤₚ antennas 224, for example to transmit to the access terminals 120.

At each access terminal 120, N_{ut,m} antennas 252 receive the Nᵤₚ downlink messages from the access point 110. Each transceiver unit 254 processes a received message from an associated antenna 252 and provides a received symbol stream. An RX spatial processor 260 performs receiver spatial processing on N_{ut,m} received symbol streams from N_{ut,m} transceiver units 254 and provides a recovered downlink data symbol stream for the access terminal 120. The receiver spatial processing may be performed in accordance with the CCMI, MMSE, or some other technique. An RX data processor 270 processes (e.g., demodulates, deinterleaves and decodes) the recovered downlink data symbol stream to obtain decoded data for the access terminal.

At each access terminal 120, a channel estimator 278 estimates the downlink channel response and provides downlink channel estimates, which may include channel gain estimates, SNR estimates, noise variance and so on. Similarly, a channel estimator 228 estimates the uplink channel response and provides uplink channel estimates. Controller 280 for each access terminal typically derives the spatial filter matrix for the access terminal based on the downlink channel response matrix H_{dn,m} for that access terminal. Controller 230 derives the spatial filter matrix for the access point based on the effective uplink channel response matrix H_{up,eff}. The controller 280 for each access terminal may send feedback information (e.g., the downlink and/or uplink eigenvectors, eigenvalues, SNR estimates, and so on) to the access point 110. The controllers 230 and 280 may also control the operation of various processing units at the access point 110 and access terminal 120, respectively.

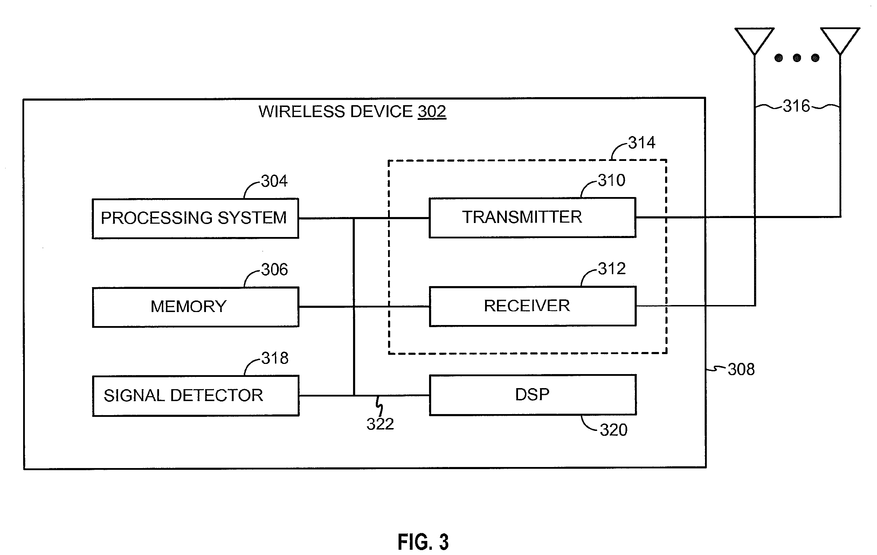

FIG. 3 illustrates various components that may be utilized in a wireless device 302 that may be employed within the wireless communication system 100 of FIG. 1 and which is useful for understanding the invention. The wireless device 302 is an example of a device that may be configured to implement the various methods described herein. The wireless device 302 may comprise an access point 110 or an access terminal 120.

The wireless device 302 may include a processing system 304 which controls operation of the wireless device 302. The processing system 304 may also be referred to as a central processing unit (CPU), hardware processor, or processor. Memory 306, which may include both read-only memory (ROM) and random access memory (RAM), provides instructions and data to the processing system 304. A portion of the memory 306 may also include non-volatile random access memory (NVRAM). The processing system 304 may perform logical and arithmetic operations based on program instructions stored within the memory 306. The instructions in the memory 306 may be executable to implement the methods described herein.

The processing system 304 may be implemented with one or more processors. The one or more processors may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that can perform calculations or other manipulations of information.

The processing system may also include a computer readable medium encoded thereon with instructions that when executed cause the wireless device 302 to perform a method of wireless communication. Such instructions shall be construed broadly to mean any type of instructions, whether referred to as software, firmware, middleware, microcode, hardware description language, or otherwise. Instructions may include code (e.g., in source code format, binary code format, executable code format, or any other suitable format of code). The instructions, when executed by the one or more processors, cause the processing system to perform the various functions described herein.

The wireless device 302 may also include a housing 308 that may include a transmitter 310 and a receiver 312 to allow transmission and reception of data between the wireless device 302 and a remote location. The transmitter 310 and receiver 312 may be combined into a transceiver 314. A single or a plurality of transceiver antennas 316 may be attached to the housing 308 and electrically coupled to the transceiver 314. The wireless device 302 may also include (not shown) multiple transmitters, multiple receivers, and multiple transceivers.

The wireless device 302 may also include a signal detector 318 that may be used in an effort to detect and quantify the level of messages received by the transceiver 314. The signal detector 318 may detect such messages as total energy, energy per subcarrier per symbol, power spectral density and other messages. The wireless device 302 may also include a digital signal processor (DSP) 320 for use in processing messages.

The various components of the wireless device 302 may be coupled together by a bus system 322, which may include a power bus, a control frame bus, and a status message bus in addition to a data bus. In some aspects, the processing system 304 alone or in conjunction with the bus system 322 may comprise an interface (e.g., hardware or software) configured to connect two or more components together such that data or information may be communicated between the two or more components. For example, in some aspects, an interface may receive information or communications from a component of the wireless device 302 or from another device. In some aspects, the interface may be configured to output information for transmission to another component of the wireless device 302 or to another device.

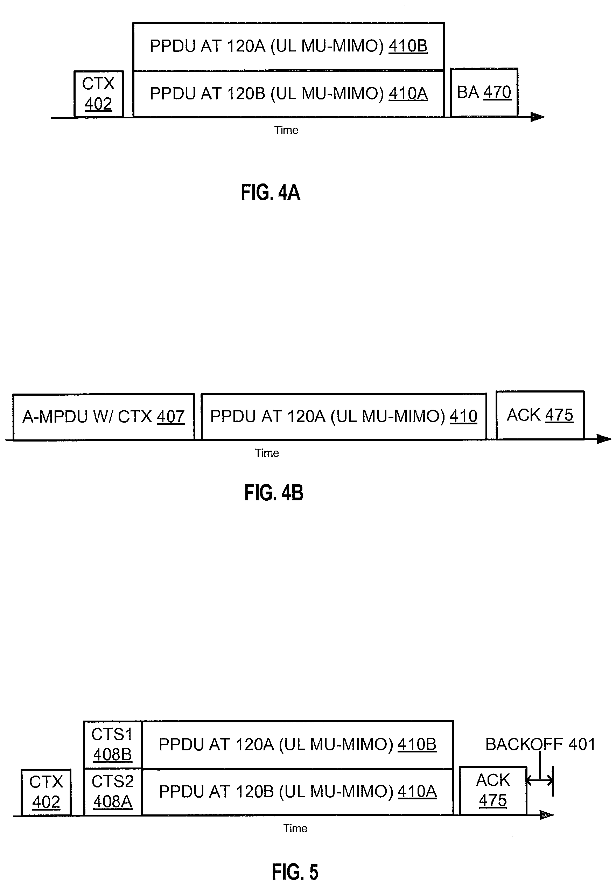

Certain aspects of the present disclosure support transmitting an uplink (UL) message from multiple access terminals to an AP. In some aspects, the UL message may be transmitted in a multi-user MIMO (MU-MIMO) system. Alternatively, the UL message may be transmitted in a multi-user FDMA (MU-FDMA) or similar FDMA system. Specifically, FIGs. 4A, 4B, 5, 6, 7 illustrate UL-MU-MIMO transmissions 410A and 410B (collectively UL-MU-MIMO transmissions 410) that would apply equally to UL-FDMA transmissions. In these aspects, UL-MU-MIMO or UL-FDMA transmissions can be sent simultaneously from multiple access terminals to an access point and may create efficiencies in wireless communication.

An increasing number of wireless and mobile devices put increasing stress on bandwidth requirements that are demanded for wireless communications systems. With limited communication resources, it is desirable to reduce the amount of traffic passing between the access point 110 and the multiple access terminals 120. For example, when multiple access terminals 120 send uplink communications to the access point 110, it is desirable to minimize the amount of traffic to complete the uplink of all transmissions. Thus, aspects described herein support utilizing communication exchanges, scheduling and certain messages for increasing throughput of uplink transmissions to the access point 110.

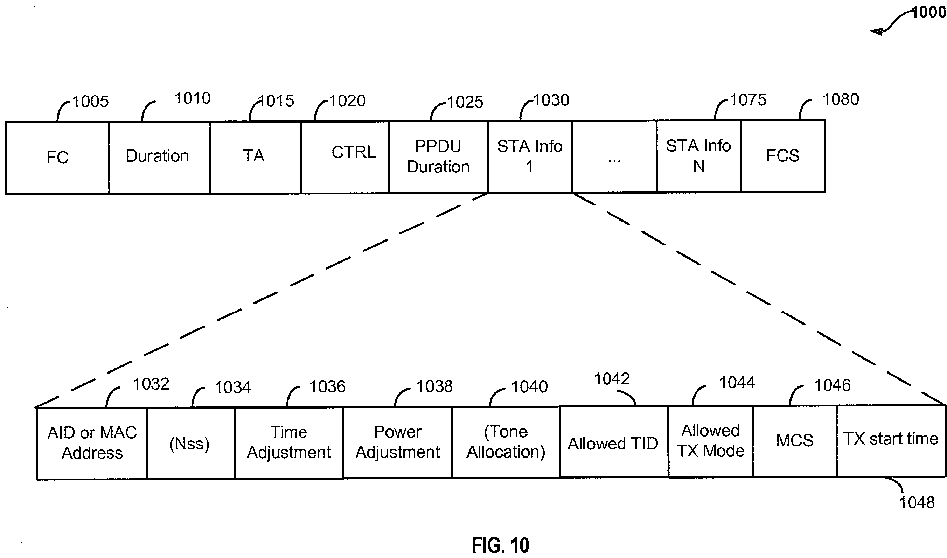

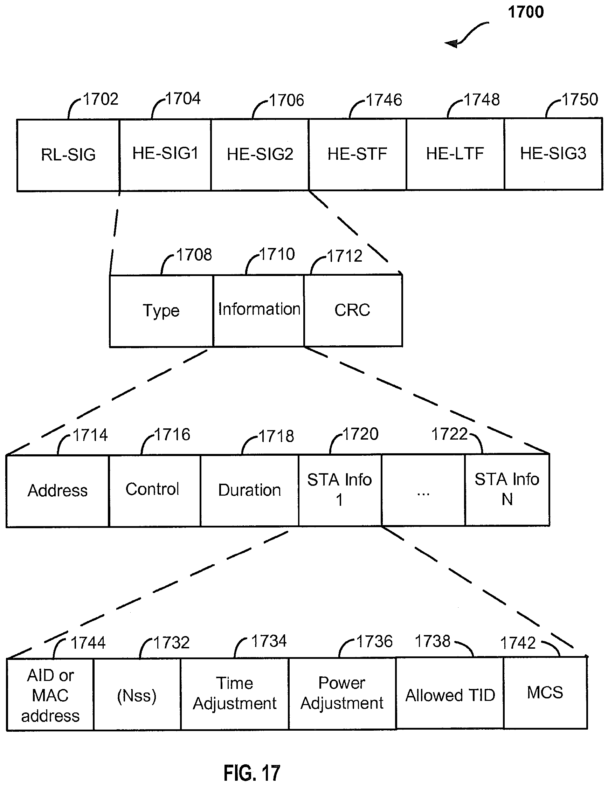

FIG. 4A is a time sequence diagram illustrating an UL-MU-MIMO protocol 400 that may be used for UL communications, in accordance with some aspects of the invention. As shown in FIG. 4A and in conjunction with FIG. 1, the access point 110 may transmit a clear to transmit (CTX) message 402 to the access terminals 120 indicating which access terminals may participate in the UL-MU-MIMO scheme, such that a particular access terminal is directed to start an UL-MU-MIMO. In some aspects, the CTX message 402 may be transmitted in a payload portion of a physical layer convergence protocol (PLCP) protocol data unit (PPDU). Example CTX message structures are described more fully below with reference to FIGs. 10-19. In some aspects, the CTX message may comprise a null data packet (NDP) (e.g., a message comprising a PLCP header and no payload). In such aspects, the CTX message information may be included in one of the fields of the PLCP header. In a PLCP header compatible with the 802.11ax standard, for example, the information may be included in one of a first high efficiency signal field (HE SIG1), a second high efficiency signal field (HE SIG 2), or a third high efficiency signal field (HE SIG 3 field), collectively, a plurality of signal fields. FIGs. 17-19 illustrate some examples of 802.11ax NDP CTX messages comprising CTX message information.

Once an access terminal 120 receives the CTX message 402 from the access point 110 where the access terminal is listed, the access terminals 120 may transmit the UL-MU-MIMO transmission 410A, 410B (collectively 410). In FIG. 4A, access terminal 120A and access terminal 120B transmit UL-MU-MIMO transmission 410A and 410B, respectively, containing physical layer convergence protocol (PLCP) protocol data units (PPDUs). Upon receiving the UL-MU-MIMO transmission 410, the access point 110 may transmit block acknowledgments (block ACK messages) 470 to the access terminals 120.

FIG. 4B is a time sequence diagram illustrating an UL-MU-MIMO protocol that may be used for UL communications, in accordance with some aspects of the invention. In FIG. 4B, a CTX message is aggregated in an aggregated MAC protocol data unit (A-MPDU) message 407. The aggregated A-MPDU message 407 may provide time to an access terminal 120 for processing before transmitting the UL messages or may allow the access point 110 to send data to the access terminals 120 before receiving uplink data.

Not all access points 110 or access terminals 120 may support UL-MU-MIMO or UL-FDMA operation. A capability indication from an access terminal 120 may be indicated in a high efficiency (HE) wireless capability element that is included in an association request or probe request and may include a bit indicating capability, the maximum number of spatial streams an access terminal 120 can use in a UL-MU-MIMO transmission, the frequencies an access terminal 120 can use in a UL-FDMA transmission, the minimum and maximum power and granularity in the power backoff, and the minimum and maximum time adjustment an access terminal 120 can perform.

A capability indication from an access point may be indicated in a HE wireless capability element that is included in an association response, beacon or probe response and may include a bit indicating capability, the maximum number of spatial streams a single access terminal 120 can use in a UL-MU- MIMO transmission, the frequencies a single access terminal 120 can use in a UL-FDMA transmission, the required power control granularity, and the required minimum and maximum time adjustment an access terminal 120 should be able to perform.

In some aspects, access terminals 120 may request to the access point 110 to be part of the UL-MU-MIMO (or UL-FDMA) protocol by sending a management message to the access point 110 indicating a request for enablement of the use of the UL-MU-MIMO feature. In some aspects, an access point 110 may respond by granting the use of the UL-MU-MIMO feature or denying it. Once the use of the UL-MU-MIMO is granted, the access terminal 120 may expect a CTX message 402 at a variety of times. Additionally, once an access terminal 120 is enabled to operate the UL-MU-MIMO feature, the access terminal 120 may be subject to follow a certain operation mode. If multiple operation modes are possible, the access point 110 may indicate to the access terminal 120 which mode to use in a HE wireless capability element, a management message, or in an operation element. In some aspects the access terminals 120 can change the operation modes and parameters dynamically during operation by sending a different operating element to the access point 110. In some aspects the access point 110 may switch operation modes dynamically during operation by sending an updated operating element or a management message to an access terminal 120 or in a beacon. In some aspects, the operation modes may be indicated in the setup phase and may be setup per access terminal 120 or for a group of access terminals 120. In some aspects the operation mode may be specified per traffic identifier (TID).

FIG. 5 is a time sequence diagram that, in conjunction with FIG. 1, illustrates an operation mode of a UL-MU-MIMO transmission, in accordance with some aspects of the invention. In such aspects, an access terminal 120 receives a CTX message 402 from an access point 110 and sends an immediate response to the access point 110. The response may be in the form of a clear to send (CTS) message 408 or another similar message. In some aspects, requirement to send a CTS message may be indicated in the CTX message 402 or may be indicated in the setup phase of the communication. As shown in FIG. 5, access terminal 120A and access terminal 120B may transmit a first CTS message 408A and a second CTS message 408B in response to receiving the CTX message 402. The modulation and coding scheme (MCS) of the first CTS message 408A and the second CTS message 408B may be based on the MCS of the CTX message 402. In such aspects, the first CTS message 408A and the second CTS message 408B comprise the same bits and the same scrambling sequence so that they may be transmitted to the access point 110 at the same time. The duration field of the CTS messages 408A, 408B may be based on the duration field in the CTX message 402 by removing the time for the CTX message PPDU. The UL-MU-MIMO transmissions 410A, 410B are then sent by the access terminals 120A, 120B as listed in the CTX message 402 messages. The access point 110 may then send an acknowledgment (ACK) message 475 to the access terminals 120A, 120B. In some aspects, the ACK messages 475 may be serial ACK messages to each access terminal or block ACK messages. In some aspects the ACK messages may be polled. This aspect creates efficiencies by simultaneously transmitting CTS messages 408A, 408B from multiple access terminals to an access point 110 instead of sequentially, which saves time and reduces the possibility of interference.

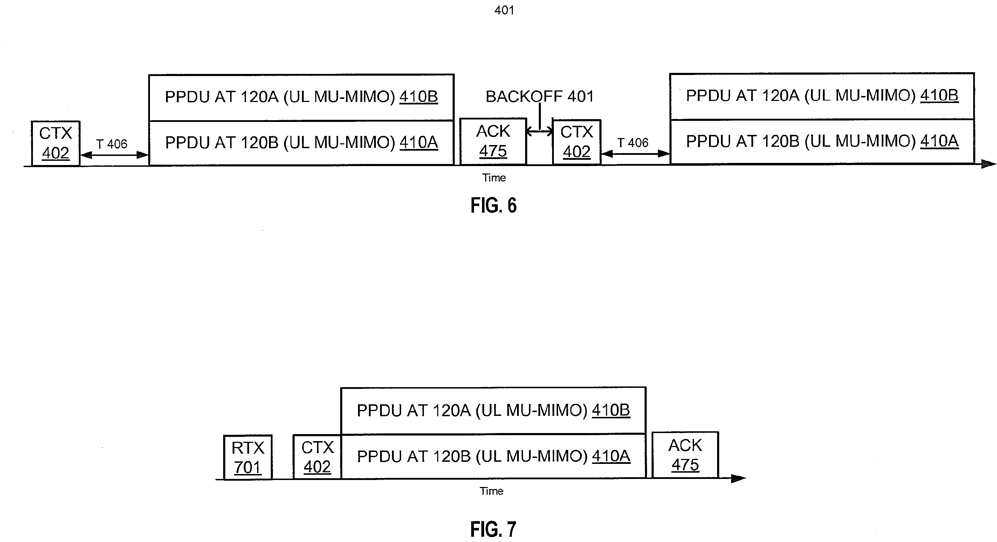

FIG. 6 is a time sequence diagram that, in conjunction with FIG. 1, illustrates another example of an operation mode of a UL-MU-MIMO transmission, in accordance with some aspects of the invention. In these aspects, access terminals 120A, 120B receive a CTX message 402 from an access point 110 and are allowed to start a UL-MU-MIMO transmission a time (T) 406 after the end of the PPDU carrying the CTX message 402. The time (T) 406 may be a short interframe space (SIFS), point interframe space (PIFS), or another time potentially adjusted with additional offsets as indicated by an access point 110 in the CTX message 402 or via a management message. The SIFS and PIFS time may be fixed by a standard or indicated by an access point 110 in the CTX message 402 or in a management message, a benefit of the time (T) 406 may include to improve synchronization or to allow access terminals 120A, 120B time to process the CTX message 402 or other messages before transmission. Increasing the interframe space (IFS) beyond PIFS may be risky, since other access terminals may be able to complete their contention and transmit during the IFS time. Where IFS > PIFS, the CTX message legacy preamble may be modified to indicate a PPDU duration that exceeds the actual PPDU duration, hence providing an increased deferral time.

Referring to FIGs. 4A-6, in conjunction with FIG. 1, the UL-MU-MIMO transmission 410 may have the same duration. The duration of the UL-MU-MIMO transmission 410 for access terminals utilizing the UL-MU-MIMO feature may be indicated in the CTX message 402 or during the setup phase. To generate a PPDU of the required duration, an access terminal 120 may build a PLCP service data unit (PSDU) so that the length of the PPDU matches the length indicated in the CTX message 402. In some aspects, an access terminal 120 may adjust the level of data aggregation in a median access control (MAC) protocol data unit (A-MPDU) or the level of data aggregation in a MAC service data unit (A-MSDU) to approach the target length. In some aspects, an access terminal 120 may add end of file (EOF) padding delimiters to reach the target length. In another approach the padding or the EOF pad fields are added at the beginning of the A-MPDU. One of the benefits of having all the UL-MU-MIMO transmissions the same length is that the power level of the transmission will remain constant.

In some aspects, an access terminal 120 may have data to upload to the access point 110 but the access terminal 120 has not received a CTX message 402 or other message indicating that the access terminal 120 may start a UL-MU-MIMO transmission.

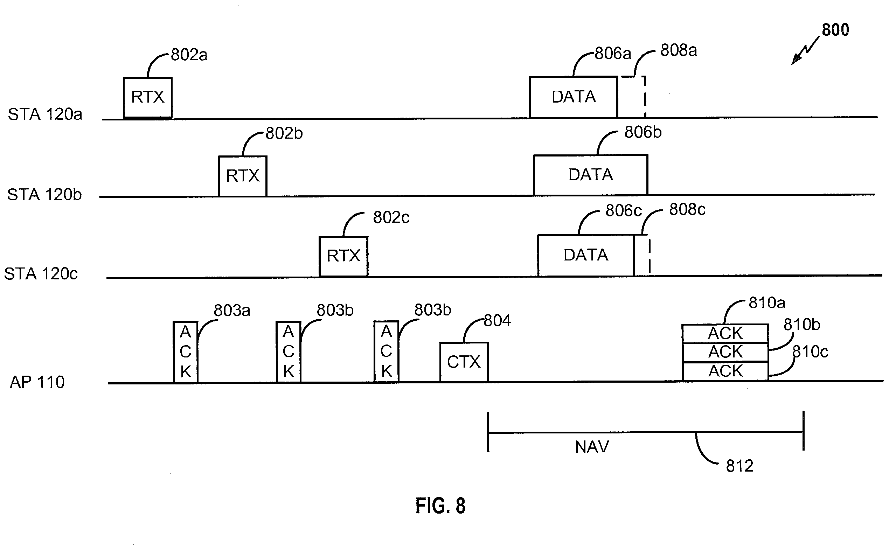

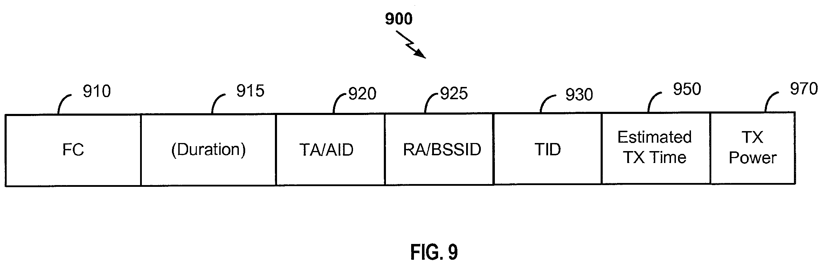

In one operation mode, the access terminals 120 may not transmit outside an UL-MU-MIMO transmission opportunity (TXOP) (e.g., after the CTX message 402). In another operation mode, access terminals 120 may transmit messages to initialize a UL-MU-MIMO transmission, and then may transmit during the UL-MU-MIMO TXOP, if for example, they are instructed to do so in a CTX message 402. In some aspects, the message to initialize a UL-MU-MIMO transmission may be a request to transmit (RTX), message which is specifically designed for this purpose (an example of a RTX message structure is described more fully below with reference to FIGs. 8 and 9). The RTX messages may be the only messages an access terminal 120 is allowed to use to initiate a UL-MU-MIMO TXOP. In some aspects, the access terminal may not transmit outside an UL-MU-MIMO TXOP other than by sending an RTX message. In some aspects, a message to initialize an UL-MU-MIMO transmission may be any message which indicates to an access point 110 that an access terminal 120 has data to send. It may be pre-negotiated that these messages indicate a UL-MU-MIMO TXOP request. For example, the following may be used to indicate that an access terminal 120 has data to send and is requesting an UL-MU-MIMO TXOP: a request to send (RTS) message, a data frame or QoS Null frame with bits 8-15 of the QoS control frame set to indicate more data, or a PS poll message. In some aspects, the access terminal may not transmit outside an UL-MU-MIMO TXOP other than by sending messages to trigger this TXOP, where this message may be an RTS message, PS poll message, or quality of service (QOS) null frame. In some aspects, the access terminal 120 may send single user uplink data as usual, and may indicate a request for a UL-MU-MIMO TXOP by setting bits in the QoS control frame of its data packet.

FIG. 7 is a time sequence diagram useful for understanding the invention, illustrating, in conjunction with FIG. 1, initializing a UL-MU-MIMO utilizing a RTX message 701. In such aspects the access terminal 120 sends to the access point 110 a RTX message 701 that includes information regarding the UL-MU-MIMO transmission. As shown in FIG. 7, the access point 110 may respond to the RTX message 701 with a CTX message 402 granting an UL-MU-MIMO TXOP to send the UL-MU-MIMO transmission 410 immediately following the CTX message 402. In some aspects, the access point 110 may respond with a CTS message (not shown) that grants a single-user (SU) UL TXOP. In some aspects, the access point 110 may respond with a message (e.g., ACK message or CTX message with a special indication, not shown) that acknowledges the reception of the RTX message 701 but does not grant an immediate UL-MU-MIMO TXOP. In some aspects, the access point 110 may respond with a message (not shown) that acknowledges the reception of the RTX message 701, does not grant an immediate UL-MU-MIMO TXOP, but grants a delayed UL-MU-MIMO TXOP and may identify the time of the TXOP that is granted. In such aspects, the access point 110 may send a CTX message 402 to start the UL-MU-MIMO at the granted time.

In some aspects, the access point 110 may respond to the RTX message 701 with an ACK message or other response message which does not grant the access terminal 120 an UL-MU-MIMO transmission but indicates that the access terminal 120 shall wait for a time (T) before attempting another transmission (e.g., sending another RTX). In such aspects the time (T) may be indicated by the access point 110 in the setup phase or in the response message. In some aspects an access point 110 and an access terminal 120 may agree on a time which the access terminal 120 may transmit a RTX message 701, RTS message, a power save (PS)-Poll message, or any other request for a UL-MU-MIMO TXOP.

In another operation mode, access terminals 120 may transmit requests for UL-MU-MIMO transmissions 410 in accordance with regular contention protocols. In some aspects, the contention parameters for access terminals 120 using UL-MU-MIMO are set to a different value than for other access terminals that are not using the UL-MU-MIMO feature. In such aspects, the access point 110 may indicate the value of the contention parameters in a beacon, association response, or through a management message. In some aspects, the access point 110 may provide a delay timer that prevents an access terminal 120 from transmitting for a certain amount of time after each successful UL-MU-MIMO TXOP or after each RTX message, RTS message, PS-Poll message, or QoS null frame. The timer may be restarted after each successful UL-MU-MIMO TXOP. In some aspects, the access point 110 may indicate the delay timer to access terminals 120 in the setup phase or the delay timer may be different for each access terminal 120. In some aspects, the access point 110 may indicate the delay timer in the CTX message 402 or the delay timer may be dependent on the order of the access terminals 120 in the CTX message 402, and may be different for each terminal.

In another operational mode, the access point 110 may indicate a time interval during which the access terminals 120 are allowed to transmit a UL-MU-MIMO transmission. In some aspects, the access point 110 indicates a time interval to the access terminals 120 during which the access terminals are allowed to send a RTX or RTS message or other request to the access point 110 to ask for an UL-MU-MIMO transmission. In such aspects, the access terminals 120 may use regular contention protocols. In some aspects, the access terminals 120 may not initiate a UL-MU-MIMO transmission during the time interval but the access point 110 may send a CTX message 402 or other message to the access terminals 120 to initiate the UL-MU-MIMO transmission.

In certain aspects, an access terminal 120 enabled for UL-MU-MIMO may indicate to an access point 110 that it requests an UL-MU-MIMO TXOP because it has data pending for UL. In some aspects, the access terminal 120 may send a RTS message or a PS-poll message to request a UL-MU-MIMO TXOP. In some aspects, the access terminal 120 may send any data frame, including a quality of service (QoS) null data frame, where the bits 8-15 of the QoS control field indicate a non-empty queue. In such aspects the access terminal 120 may determine during the setup phase which data frames (e.g., RTS message, PS-Poll message, QoS null frame, etc.) will trigger a UL-MU-MIMO transmission when the bits 8-15 of the QoS control field indicate a non-empty queue. In some aspects, the RTS message, PS-Poll message, or QoS null frames may include a 1 bit indication allowing or disallowing the access point 110 to respond with a CTX message 402. In some aspects, the QoS null frame may include TX power information and a per TID queue information. The TX power information and per TID queue information may be inserted in the two bytes of the sequence control and QoS controls fields in a QoS null frame and the modified QoS null frame may be sent to the access point 110 to request a UL-MU-MIMO TXOP. In some aspects, referring to FIGs. 1 and 7, the access terminal 120 may send a RTX message 701 to request a UL-MU-MIMO TXOP.

In response to receiving an RTS message, RTX message, PS-poll or QoS null frame, or other trigger message as described above, an access point 110 may send a CTX message 402. In some aspects, also referring to FIG. 7, after the transmission of the CTX message 402 and the completion of the UL-MU-MIMO transmissions 410A and 410B, TXOP returns to the access terminals 120A, 120B which can decide on how to use the remaining TXOP. In some aspects, referring to FIG. 7, after the transmission of the CTX message 402 and the completion of the UL-MU-MIMO transmissions 410A and 410B, TXOP remains with the access point 110 and the access point 110 may use the remaining TXOP for additional UL-MU-MIMO transmissions by sending another CTX message 402 to either access terminals 120A, 120B or to other access terminals.

FIG. 8 is a message timing diagram of multi-user uplink communication, in accordance with some aspects of the invention. Message exchange 800 shows communication of wireless messages between an access point 110 and three access terminals 120A-120C. Message exchange 800 indicates that each of access terminals 120A-120C transmits a request to transmit (RTX) message 802A-802C to the access point 110. Each of RTX messages 802A-802C indicate that the transmitting access terminal 120A-120C has data available to be transmitted to the access point 110.

After receiving each of RTX messages 802A-802C, the access point 110 may respond with a message indicating that the access point 110 has received the RTX message. As shown in FIG. 8, the access point 110 transmits ACK messages 803A-803C in response to each of the RTX messages 802A-802C. In some aspects, the access point 110 may transmit a message (e.g., a CTX message) indicating that each of the RTX messages 802A-802C has been received but that the access point 110 has not granted a transmission opportunity for the access terminals 120A-120C to transmit uplink data. In FIG. 8, after sending ACK message 803C, the access point 110 transmits a CTX message 804. In some aspects, the CTX message 804 is transmitted to at least the access terminals 120A-120C. In some aspects, the CTX message 804 is broadcast. In some aspects, the CTX message 804 indicates which access terminals are granted permission to transmit data to the access point 110 during a transmission opportunity. The starting time of the transmission opportunity and its duration may be indicated in the CTX message 804 in some aspects. For example, the CTX message 804 may indicate that the access terminal 120A-120C should set their network allocation vectors to be consistent with network allocation vector (NAV) 812.

At a time indicated by the CTX message 804, the three access terminals 120A-120C transmit data 806A-806C to the access point 110. The data 806A-806C are transmitted at least partially concurrently during the transmission opportunity (e.g., at least 2 of the access terminals 120A, 120B, 120C are transmitting at a same time). The transmissions of data 806A-806C may utilize uplink multi-user multiple input, multiple output transmissions (UL-MU-MIMO) or uplink frequency division multiple access (UL-FDMA).

In some aspects, access terminals 120A-120C may transmit pad data such that the transmissions of each access terminal transmitting during a transmission opportunity are of approximately equal duration. Message exchange 800 shows access terminal 120A transmitting pad data 808A while access terminal 120C transmits pad data 808C. The transmission of pad data ensures that the transmissions from each of the access terminals 120A-120C complete at approximately the same time. This may provide for a more equalized transmission power over the entire duration of the transmission, optimizing access point 110 receiver efficiencies.

After the access point 110 receives the data transmissions 806A-806C, the access point 110 transmits acknowledgments 810A-810C to each of the access terminals 120A-120C. In some aspects, the acknowledgments 810A-810C may be transmitted at least partially concurrently using either DL-MU-MIMO or DL-FDMA.

FIG. 9 shows a diagram of a RTX message 900, useful for understanding the invention. The RTX message 900 includes a message control (FC) field 910, a duration field 915 (optional), a transmitter address (TA) or allocation identifier (AID) field 920, a receiver address (RA) or a basic service set identifier (BSSID) field 925, a TID field 930, an estimated transmission (TX) time field 950, and a TX power field 970. The FC field 910 indicates a control subtype or an extension subtype. The duration field 915 indicates to any receiver of the RTX message 900 to set the NAV. In some aspects, the RTX message 900 may not have a duration field 915. The TA or AID field 920 indicates the source address which can be an AID or a full MAC address. The RA or BSSID field 925 indicates the RA or BSSID, respectively. In some aspects the RTX message 900 may not contain a RA or BSSID field 925. The TID field 930 indicates the access category (AC) for which the user has data. The Estimated TX time field 950 indicates the time requested for the UL-TXOP and may be the time required for an access terminal 120 to send all the data in its buffer at the current planned MCS. The TX power field 970 indicates the power at which the message is being transmitted and can be used by the access point to estimate the link quality and adapt the power backoff indication in a CTX message.

In some aspects, before an UL-MU-MIMO communication can take place, an access point 110 may collect information from the access terminals 120 that may participate in the UL-MU-MIMO communication. An access point 110 may optimize the collection of information from the access terminals 120 by scheduling the transmissions from the access terminals 120.

As discussed above, the CTX message 402 may be used in a variety of communications. FIG. 10 is a diagram of a clear to transmit (CTX) message 1000, in accordance with some aspects of the invention. The CTX message 1000 is a control frame that includes a message control (FC) field 1005, a duration field 1010, a transmitter address (TA) field 1015, a control (CTRL) field 1020, a PPDU duration field 1025, a station (STA) info field 1030, and a message check sequence (FCS) field 1080. The FC field 1005 indicates a control subtype or an extension subtype. The duration field 1010 indicates to any receiver of the CTX message 1000 to set the NAV. The TA field 1015 indicates the transmitter address or a BSSID. The control field 1020 is a generic field that may include information regarding the format of the remaining portion of the message (e.g., the number of STA info fields and the presence or absence of any subfields within a STA info field), indications for rate adaptation for the access terminals 120, indication of allowed TID, and indication that a CTS message must be sent immediately following the CTX message 1000. The control field 1020 may also indicate if the CTX message 1000 is being used for UL-MU-MIMO or for UL FDMA or both, indicating whether a Nss or Tone allocation field is present in the STA info field 1030.

Alternatively, the indication of whether the CTX message 1000 is for UL-MU-MIMO or for UL FDMA can be based on the value of the subtype. Note that UL-MU-MIMO and UL FDMA operations can be jointly performed by specifying to an access terminal 120 both the spatial streams to be used and the channel to be used, in which case both fields are present in the CTX message 1000; in this case, the Nss indication is referred to as a specific tone allocation. The PPDU duration field 1025 indicates the duration of the following UL-MU-MIMO PPDU that the access terminals 120 are allowed to send. The STA info field 1030 contains information regarding a particular access terminal 120 and may include a per-access terminal set of information (see STA info 1 1030 and STA info N 1075). The STA info field 1030 may include an AID or MAC address field 1032 which identifies an access terminal 120, a number of spatial streams field (Nss) field 1034 which indicates the number of spatial streams an access terminal 120 may use (in an UL-MU-MIMO system), a Time Adjustment field 1036 which indicates a time that an access terminal 120 should adjust its transmission compared to the reception of a trigger message (the CTX message 1000 in this case), a Power Adjustment field 1038 which indicates a power backoff an access terminal 120 should take from a declared transmit power, a Tone Allocation field 1040 which indicates the tones or frequencies an access terminal 120 may use (in a UL-FDMA system), an Allowed TID field 1042 which indicates the allowable TID, an Allowed TX Mode field 1044 which indicates the allowed TX modes, a MCS field 1046 which indicates the MCS the access terminal 120 should use, and a TX start time field 1048 which indicates a start time for the access terminal 120 to transmit uplink data. In some aspects, the allowed TX modes may include a short, long guard interval (GI) or cyclic prefix mode, a binary convolutional code (BCC), low density parity check (LDPC) mode (generally, a coding mode), or a space-time block coding (STBC) mode.

In some aspects, the STA info fields 1030-1075 may be excluded from the CTX message 1000. In these aspects, the CTX message 1000 with the missing STA info fields may indicate to the access terminals 120 receiving the CTX message 1000 that a request message to uplink data (e.g., RTS message, RTX message or QoS Null frame) has been received but a transmission opportunity has not been granted. In some aspects, the control field 1020 may include information regarding the requested uplink. For example, the control field 1020 may include a waiting time before sending data or another request, a reason code for why the request was not granted, or other parameters for controlling medium access from the access terminal 120. A CTX message with missing STA info fields may also apply to CTX messages 1100, 1200, 1300, 1400, 1500, 1600, 1700, 1800 and 1900 described below.

In some aspects, an access terminal 120 receiving the CTX message 1000 with a Allowed TID field 1042 indication may be allowed to transmit data only of that TID, data of the same or higher TID, data of the same or lower TID, any data, or only data of that TID first, then if no data is available, data of other TIDs. The FCS field 1080 indicates the carries an FCS value used for error detection of the CTX message 1000.

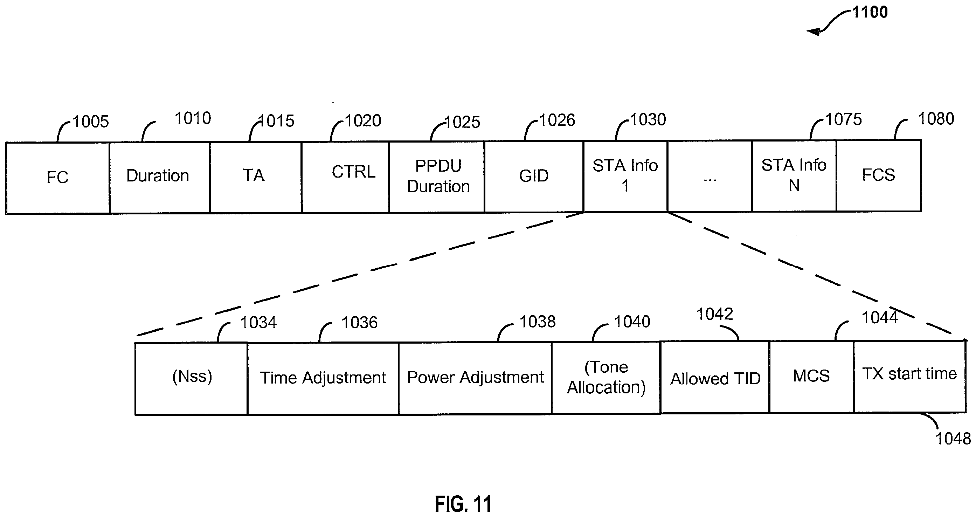

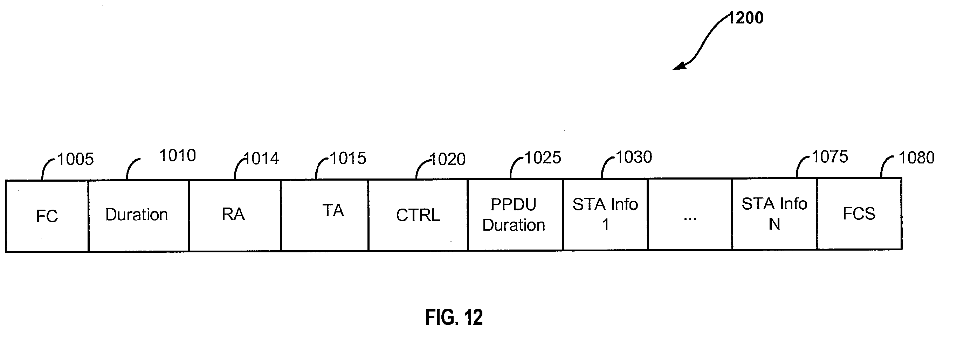

FIG. 11 is another diagram of a CTX message 1100, in accordance with some aspects of the invention. In such aspects and in conjunction with FIG. 10, the STA info 1030 field does not contain the AID or MAC Address field 1032 and instead the CTX message 1000 includes a group identifier (GID) field 1026 which identifies the access terminals by a group identifier rather than an individual identifier. FIG. 12 is another diagram of a CTX message 1200, in accordance with some aspects of the invention. In such aspects and in conjunction with FIG. 11, the GID field 1026 is replaced with a receiver address (RA) field 1014 which identifies a group of access terminals through a multicast MAC address.

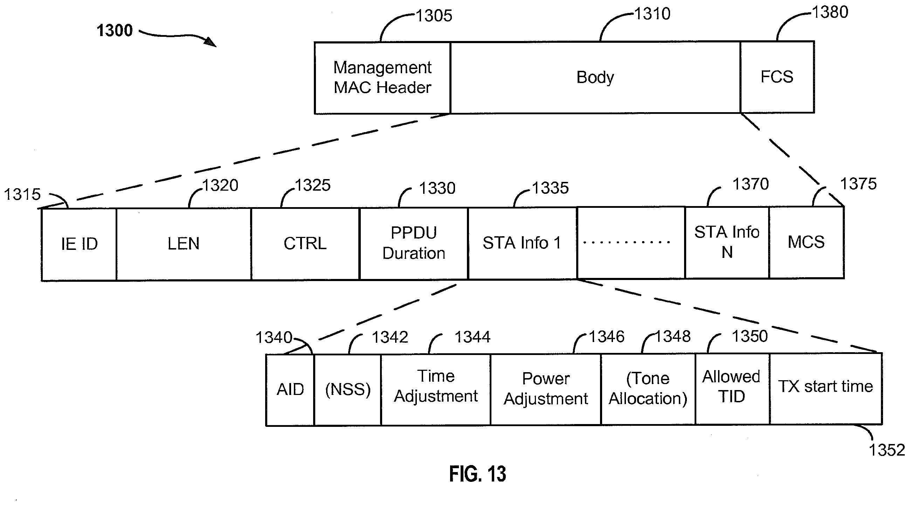

FIG. 13 is another diagram of a CTX message 1300, in accordance with some aspects of the invention. In such aspects, the CTX message 1300 is a management message that includes a Management MAC Header field 1305, a Body field 1310, and a FCS field 1380. The Body field 1310 includes an information element (IE) identifier (ID) field 1315 which identifies an information element (IE), a length (LEN) field 1320 which indicates the length of the CTX message 1300, a CTRL field 1325 which includes the same information as the control field 1020, a PPDU Duration field 1330 which indicates the duration of the following UL-MU-MIMO PPDU that the access terminals 120 are allowed to send, a STA info 1 field 1335 and a MCS field 1375 which can indicate the MCS for all the access terminals to use in the following UL-MU-MIMO transmission, or an MCS backoff for all the access terminals to use in the following UL-MU-MIMO transmission. The STA info 1 field 1335 (along with STA info N field 1370) represent a per access terminal field that includes AID field 1340 which identifies an access terminal, a number of spatial streams field (Nss) field 1342 which indicates the number of spatial streams an access terminal may use (in an UL-MU-MIMO system), a Time Adjustment field 1344 which indicates a time that an access terminal should adjust its transmission time compared to the reception of a trigger message (the CTX message in this case), a Power Adjustment field 1346 which indicates a power backoff an access terminal 120 should take from a declared transmit power, a Tone Allocation field 1348 which indicates the tones or frequencies an access terminal 120 may use (in a UL-FDMA system), an Allowed TID field 1350 which indicates the allowable TID, and a TX start time field 1048 which indicates a start time for the access terminal to transmit uplink data.

In some aspects, the CTX message 1000 or the CTX message 1300 may be aggregated in an A-MPDU to provide time to an access terminal 120 for processing before transmitting the UL messages. In such aspects, padding or data may be added after the CTX message to allow an access terminal 120 additional time to process the forthcoming packet. One benefit to padding a CTX message may be to avoid possible contention issues for the UL messages from other access terminals 120, as compared to increasing the interframe space (IFS) as described above. In some aspects, if the CTX message is a management message, additional padding information elements (IEs) may be sent. In some aspects, if the CTX message is aggregated in a A-MPDU, additional A-MPDU padding delimiters may be included. Padding delimiters may include EoF delimiters (4Bytes) or other padding delimiters. In some aspects, the padding may be achieved by adding data, control or Management MPDPUs, as long as they are not required to be processed within the IFS response time. In such a case it may be beneficial for the receiver to know which MPDUs are padded and not require an immediate response. The padded MPDUs may be preceded by an indication in a delimiter field, for example setting the EoF bit = 1, when the length is greater than 0. The MPDUs may include an indication to the receiver that no immediate response is required and will not be required by any of the following MPDUs. In some aspects, the access terminals 120 may request of an access point 110 a minimum duration or padding for the CTX message 1300. In some aspects, the padding may be achieved by adding physical layer (PHY) OFDMA symbols, which may include undefined bits not carrying information, or may include bit sequences that carry information, as long as they do not need to be processed within the IFS time. The presence and/or duration of the PHY padding may be a function of or indicated by one or more transmission parameters, such as the modulation and coding scheme (MCS), the guard interval (GI), a coding type, and/or a packet duration. In some aspects, access terminals 120 may have different reception capabilities. Accordingly, the access terminals 120 may indicate to the access point 110 for which messages and under which transmission conditions the padding should be used, and how long the padding should be.

In some aspects, the padding may be performed by the responding access terminal 120. The access terminal 120 may be able to decode the CTX message 1300 information and access start the transmission of the UL MU response PPDU at the requested time. The access terminal 120 may instead need more time to process the data to be included in the payload of the UL MU PPDU (fetch the data from queues, encryption etc.). Accordingly, the access terminal 120 may add some pre-padding to gain more time to process the data. The pre-padding may be in the form of A-MPDU delimiters including a length=0 indication.

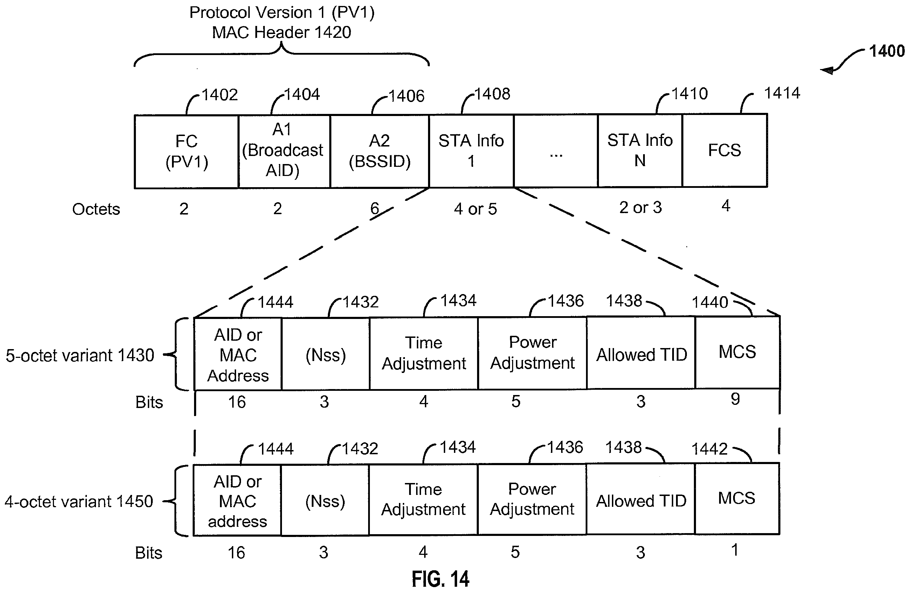

In some aspects of the invention, the CTX message 402 may have a format as shown in FIG. 14. FIG. 14 is a diagram of a CTX message 1400, in accordance with some aspects. In these aspects, the CTX message 1400 is a broadcast control frame that comprises a protocol version 1 (PV1) MAC header 1420 including a message control (FC) field 1402, a local address or local identifier (A1) field 1404, and a second address (A2) field 1406 (e.g., three fields). As shown, the FC field 1402 may have a length of 2 bytes (octets) and may comprise a plurality of bits (e.g., 2 bits that are not shown) reserved for indicating the "protocol version 1", as well as a type field (not shown) indicating the "CTX message" message type. The local address or local identifier (A1) field 1404 may also have a length of 2 bytes, as opposed to 6 bytes, for example. In some aspects, the local address field 1404 includes a local MAC address. The term "local address" or "local identifier" may correspond to a non-unique 2-byte MAC address assigned to one or more access terminals 120 in the basic service set (BSS) by the associated access point 110. Since the local address field 1404 is 2 bytes in length rather than 6 bytes (as is a full length, unique MAC address) the difference in overhead of 4 bytes may be saved to improve efficiency of data throughput. In some aspects, the local MAC address included in the local address field 1404 may be a broadcast association identifier (AID), (e.g., the broadcast AID including all zeros). In some aspects, the local address may comprise a group ID corresponding to or identifying two or more access terminals as intended recipients of the message 1400. The second address (A2) field 1406 may have a length of 6 bytes and may comprise a full, 6 byte unique MAC address. In some aspects, the second address field 1406 may include a BSSID of the access point 110 that currently serves the associated BSS.

The CTX message 1400 may additionally include a plurality of STA info fields 1408, 1410. For example, as shown in FIG. 14, the CTX message 1400 may include a first STA info field 1408, an Nth STA info field 1410, and any STA info fields between the first and Nth STA info fields (not shown). The present application contemplates at least two variations for STA info field format: a 5 byte (octet) variant 1430 and a 4 byte (octet) variant 1450. Each of the variants may comprise an address field 1444 for indicating which of the plurality of access terminals indicated in the A1 field 1404 the particular STA info field 1408, 1410 corresponds to, a number of spatial streams field (Nss) field 1432 which indicates the number of spatial streams an access terminal may use (in an UL-MU-MIMO system), a time adjustment field 1434 which indicates a time that an access terminal should adjust its transmission compared to the reception of a trigger message (the CTX message 1400 in this case), a power adjustment field 1436 which indicates a power backoff that an access terminal should take from a declared transmit power, an allowed TID field 1438 which indicates the allowable TID, and a modulation and coding scheme (MCS) field 1440 which indicates the MCS the access terminal should use. The 5 byte variant 1430 may have field lengths for each of the fields 1444, 1432, 1434, 1436, 1438 and 1440 of 16 bits, 3 bits, 4 bits, 5 bits, 3 bits and 9 bits, respectively. By contrast, in the 4 byte variant 1450, all field lengths may be the same as the 5 byte variant 1430 except the MCS field 1442 may have a length of 1 bit rather than 9 bits, reducing the total length by 8 bits (one byte).

The CTX message 1400 further comprises an FCS field 1414, which carries an FCS value used for error detection of the CTX message 1400 and may have a length of 4 bytes. It should be noted that the PV1 MAC header 1420 does not include a duration field, further reducing the overhead required to transmit the CTX message 1400 and further increasing efficiency of data throughput.

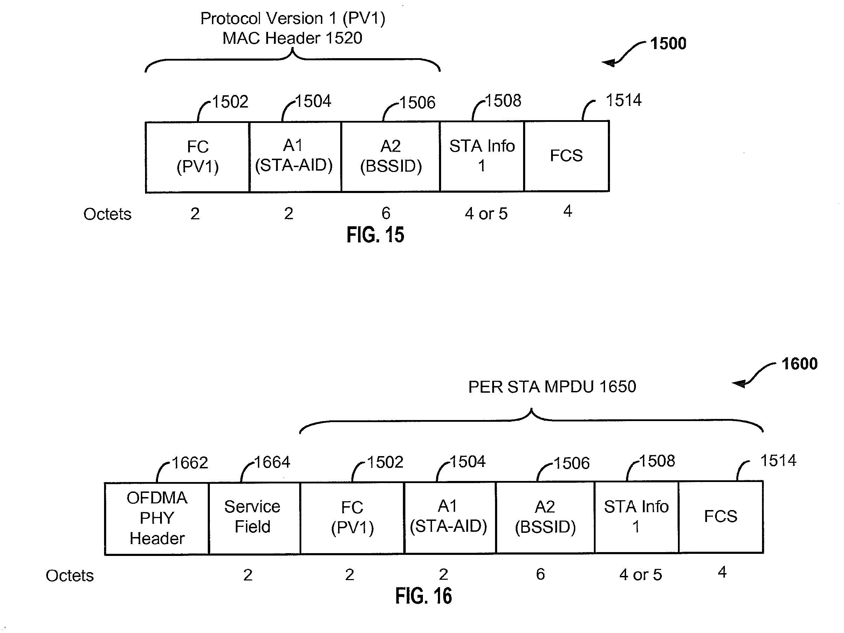

In some aspects, where the CTX message 402 is a unicast PV1 CTX message, the CTX message 402 may have a format as shown in FIG. 15. FIG. 15 is a diagram of a unicast CTX message 1500, in accordance with some aspects of the invention. In these aspects, the unicast PV1 CTX message 1500 comprises a protocol version 1 MAC header 1520 as previously described in connection with FIG. 14, including a message control (FC) field 1502, a local address or local identifier (A1) field 1504, and a second address (A2) field 1506 (e.g., three fields). The FC field 1502 and the second address (A2) field 1506 may be as previously described in connection with FIG. 14. However, rather than including a broadcast MAC address (e.g., AID) in the local address (A1) field 1504, local address field 1504 includes a local address for a single access point (access terminal) having a length of 2 bytes.

The CTX message 1500 may additionally include a single STA info field 1508, which may include substantially the same fields as previously described in connection with either of the 5 byte variant 1430 and/or the 4 byte variant 1450 in FIG. 14. In some aspects, since the local address (A1) field 1504 includes only one address, the STA info field 1508 may not include the address field 1444, as previously described in connection with FIG. 14. In such aspects, the 5 byte variant 1430 may be a 3 byte variant and the 4 byte variant 1450 may be a 2 byte variant. The CTX message 1500 further comprises an FCS field 1514 having the same characteristics as the FCS field 1414 of FIG. 14. Since the local address field 1504 includes a local MAC address for only one device, where multiple devices are to transmit substantially simultaneously in a MU mode, multiple CTX messages 1500 indicating a same transmission time may be transmitted, one addressed to each of the multiple devices.

In some aspects of the invention, the unicast PV1 CTX message may be included in a multi-user (MU) PPDU having a format as shown in FIG. 16. FIG. 16 is a diagram of a MU PPDU 1600 comprising an OFDMA PHY header 1662 and one or more per-access terminal physical layer service data units (PSDUs). Each of the one or more per-access terminal PSDUs may include an MPDU 1650 comprising the unicast CTX message 1500 of FIG. 15. The one or more per-access terminal PSDU additionally includes a service field 1664 before the MPDU 1650, having a length of 2 bytes. In some aspects, the OFDM PHY header 1662 may be transmitted in approximately 20µs, while the service field 1664 and the MPDU 1650 may be transmitted at an increased data rate, as compared to the OFDMA PHY header 1662, based on an indicated MCS.

In some aspects, the CTX message 402 may be a null data packet (NDP) (i.e., a PPDU comprising the PLCP header and no PSDU). The PLCP header comprises one or more fields that may carry the information for the CTX message functionalities. In some aspects, the NDP CTX message may have a format as shown in FIG. 17.

FIG. 17 is a diagram of an NDP CTX message 1700, in accordance with some aspects of the invention. The NDP CTX message 1700 may be a broadcast CTX message, similar to that previously described in connection with FIG. 14. The NDP CTX message 1700 may include a non-legacy portion having a repetition legacy message (RL-SIG) field 1702, a first high efficiency message (HE-SIG1) field 1704, a second high efficiency message (HE-SIG2) field 1706, a high efficiency short training (HE-STF) field 1746, a high efficiency long training (HE-LTF) field 1748 and a third high efficiency message (HE-SIG3) field 1750.

The RL-SIG field 1702 may be a repetition of an L-SIG field from a legacy preamble portion of the NDP CTX message 1700 (not shown). The reliability of the NDP CTX message 1700 may be improved by repeating the L-SIG (not shown) in the non-legacy portion. In some examples, the RL-SIG field 1702 may be approximately 4 µs long. In other examples, the RL-SIG field 1702 may have other durations.

The HE-SIG1 field 1704 may be an information field that includes information related to the format of the PPDU that is intended to be decoded by all recipients of the NDP CTX message 1700. In some examples, the HE-SIG1 field 1704 is a fixed length. In one such example, the HE-SIG1 field 1704 has a length of 3.2 µs, plus the length of a guard interval. In other examples, the HE-SIG1 field 1704 may have different lengths.

The HE-SIG2 field 1706 may be an information field that includes extended information related to the format of the packet or additional operational indications. The HE-SIG2 field 1706 may also be intended to be received and decoded by all recipients of the NDP CTX message 1700. In some examples, the HE-SIG2 field 1706 is a variable length. In other examples, the HE-SIG2 field 1706 may be a fixed length.

The HE-STF field 1746 and the field HE-LTF 1748 may be training symbols that include information for refreshing channel estimation and synchronization. The HE-STF field 1746 and the HE-LTF field 1748 may include per-STA information and may be transmitted only on a specific sub-band or spatial stream for that access terminal. In one example, the HE-STF field 1746 may have a duration of approximately 4 to 8 µs. A duration of the HE-LTF field 1748 may be dependent on the number of spatial time streams (N_{STS}) used in the wireless communication system. In other examples, the durations of the HE-STF field 1746 and the HE-LTF field 1748 may differ from the specific examples described herein.

The non-legacy portion of the NDP CTX message 1700 may also include the HE-SIG3 field 1750. The HE-SIG3 field 1750 may include per-STA information and may have variable length. In some examples, the HE-SIG3 field 1750 may be sent only in a sub-band for a specific access terminal or on a specific spatial stream for the specific access terminal.

The RL-SIG field 1702, HE-SIG1 field 1704, and HE-SIG2 field 1706 may include information for each recipient of the NDP CTX message 1700. That is, the information may be transmitted on each relevant channel, such as every 20 MHz channel of a 40 or 80 MHz bandwidth. In other examples, other channels and bandwidths may be used. In contrast, the HE-STF field 1746, HE-LTF field 1748, and HE-SIG3 field 1750 may be a per-access terminal portion. That is, those fields may contain information relevant to only one access terminal. In that case, different HE-STF field 1746, HE-LTF field 1748, and HE-SIG3 field 1750 may be transmitted on a separate channel for each access terminal.

The HE-SIG1 field 1704 and/or the HE-SIG2 field 1706 may comprise several fields, including a type field 1708, an information field 1710, and a cyclic redundancy check (CRC) field 1712. The type field 1708 may describe the type of message or the function of the message. In one example, the type field 1708 is 4 bits. The CRC field 1712 indicates information related to a cyclic redundancy check. In particular, the CRC field 1712 may include 16 bits that force a checksum to a known constant in order to check for transmission errors. In other examples, other fields and bit lengths may be used.

The information field 1710 may further comprise additional fields, including a transmitter address field 1714, a control (CTRL) field 1716, a PPDU duration field 1718, and multiple STA information fields 1720 and 1722. In this example, the HE-SIG2 field 1706 includes N STA information fields (e.g., access terminal 1 information field 1720 through access terminal N information field 1722). A STA information field may include additional sub-fields as will be described in more detail below.

The address field 1714 may indicate a transmitter address or a BSSID. In some aspects, the address field 1714 may also comprise a "local address" or "local identifier" which, as described in connection with FIG. 14, may be a non-unique MAC address having a shortened length as compared to a full length MAC address (e.g., 2 bytes versus 6 bytes). The CTRL field 1716 may be a generic field that may include information relating to a format of the remaining portion of the NDP CTX message, indication of rate adaptations, indication of allowed traffic identifier (TID), and an indication that a clear to send messages must be sent responsive to the NDP CTX message 1700. For example, the CTRL field 1716 may include a number of STA information fields present and whether any sub-fields are included in the STA information fields. The CTRL field 1716 may also include additional control information.

Each STA information field may include a per-access terminal set of information. Sub-fields of a STA information field may include an association identifier (AID) or MAC address field 1744, a number of spatial streams (Nss) field 1732, a time adjustment field 1734, a power adjustment field 1736, an allowed TID field 1738, and a modulation and coding scheme (MCS) field 1742. Each of the fields 1744, 1732, 1734, 1736, 1738 and 1742 may correspond to the fields 1444, 1432, 1434, 1436, 1438, and 1442 of FIG. 14, respectively. In some examples, not all of the described sub-fields are included in the HE-SIG2 field 1706 for an NDP CTX message with a broadcast CTX message. In some examples, for each channel (e.g., a 20 MHz channel), the trigger information may refer to a different group of access terminals. A per-access terminal portion may or may not be included in an NDP CTX message with a broadcast CTX message.

In an example of an NDP CTX message for multiple user unicast CTX message, the information described being included in the HE-SIG2 field 1706 may be located in an HE-SIG3 field for each different access terminal. In such an example, the information field 1710 may include only a single STA information field.

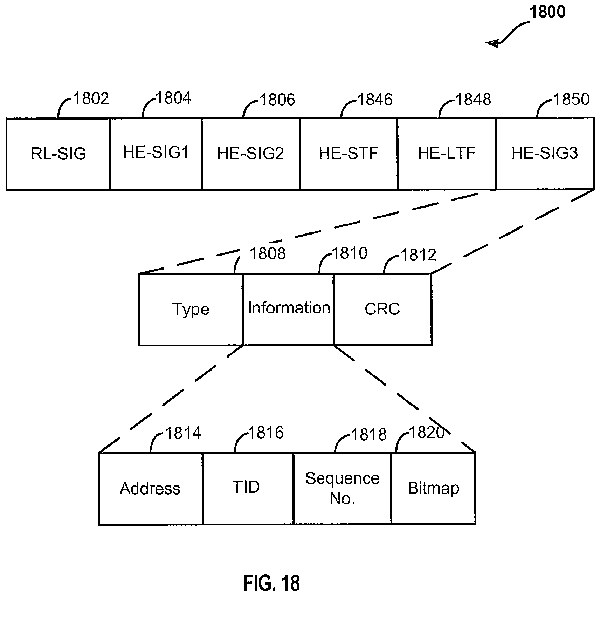

FIG. 18 is another diagram of a unicast NDP CTX message 1800, in accordance with some aspects of the invention. The NDP CTX message 1800 may be used for individual access terminals, similar to that previously described in connection with FIG. 15. The unicast NDP CTX message 1800 may include fields as discussed above with respect to FIG. 17. For example, the unicast NDP CTX message 1800 may include a RL-SIG field 1802, an HE-SIG1 field 1804, an HE-SIG2 field 1806, an HE-STF field 1846, an HE-LTF field 1848, and an HE-SIG3 field 1850.

The HE-SIG3 1806 may include a type field 1808, an information field 1810, and a CRC field 1812. The type field 1808 and the CRC field 1812 may be an example of one or more aspects of the type field 1708 and the CRC field 1712 of FIG. 17. The information field 1810 may further include an access terminal ID or access point ID field 1814, a TID field 1816, a sequence number field 1818, and a bitmap field 1820. The access terminal ID or access point ID field 1814 may identify the access terminal or access point and may comprise a "local address" or "local identifier," as previously described in connection with FIGs. 14-17, having a length shorter than a full MAC address (e.g., 2 bytes versus 6 bytes). The TID field 1816 may indicate an access category (AC) for which the access terminal or access point has data. The sequence number field 1818 acts as a modulo-counter for higher-level messages. The bitmap 1820 may include bits for acknowledging or not acknowledging messages.

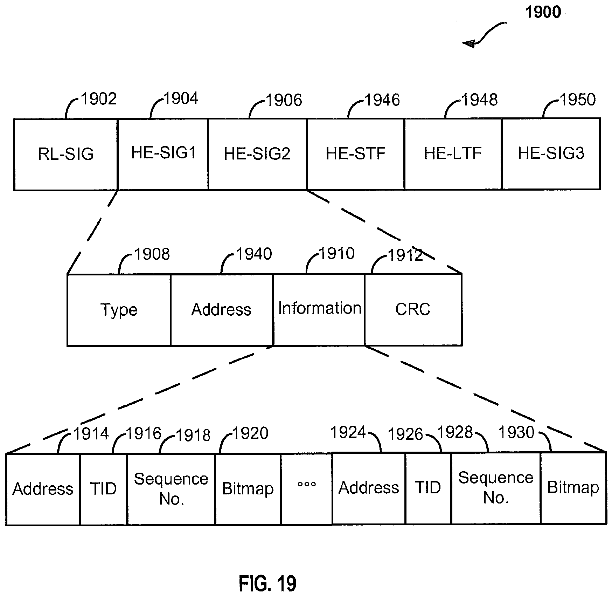

FIG. 19 is another diagram of a NDP CTX message 1900, in accordance with some aspects of the invention. The NDP CTX message 1900 may include fields as discussed above with respect to FIGs. 17-18. For example, the NDP CTX message 1900 may include a RL-SIG field 1902, an HE-SIG1 field 1904, an HE-SIG2 field 1906, an HE-STF field 1946, an HE-LTF field 1948, and an HE-SIG3 field 1950.

The HE-SIG1 field 1904 and an HE-SIG2 field 1906 may include a type field 1908, an address field 1940, an information field 1910, and a CRC field 1912. The type field 1908 and the CRC field 1912 may be an example of one or more aspects of the type fields 1708, 1808 and the CRC fields 1712, 1812 of FIGs. 17 and 18.

The address field 1940 may identify an access point. In some aspects, the address field 1940 may comprise a "local identifier" or "local address," as previously described in connection with FIGs. 14-18, having a non-unique shortened MAC address as compared to a full length MAC address (e.g., 2 bytes versus 6 bytes). The information field 1910 may further include an access terminal ID or access point ID field 1914, a TID field 1916, a sequence number field 1918, and a bitmap field 1920. The information field 1910 may also include an access terminal ID or access point ID field 1924, a TID field 1926, a sequence number field 1928, and a bitmap field 1930. In other examples, the information field 1910 may include additional sets of fields for multiple other access terminals. The fields 1914, 1924, 1916, 1926, 1918, 1928, 1920, 1930 may correspond to the fields 1814, 1816, 1818, 1820 of FIG. 18, respectively.

In some aspects the preamble structure and information described for the NDP CTX message 1900 may be used in a non-NDP PPDU. In such a case the non-NDP PPDU would comprise a PLCP Header and one or more PSDUs (one per subchannel or stream). The PLCP header may have the same format as described in relation to FIGs. 17-19, while each PSDU may have a format according to the 802.11ax standard PSDU and may carry additional MPDUs. Such a non-NDP CTX message may be beneficial in that it provides for the carrying of CTX message information in the PLCP Header of a PPDU that also carries data for one or more access terminals, hence reducing the overhead that a transmission of a separate CTX message and Data PPDUs would incur. When the non-NDP CTX message PPDU is used to trigger UL-MU-MIMO, OFDMA transmission from one or more access terminals, the access terminals may send the UL-MU-MIMO or OFDMA PPDUs a short interframe space (SIFS) time after the non-NDP CTX message PPDU is fully received. Note that the CTX message information useful for the access terminals responses are included in the PLCP header, which is the initial portion of the PPDU, followed by additional PSDU transmission, hence allowing for increased time for the access terminals to process the CTX message information.

In accordance with some aspects, the NDP CTX message 1900 may be an NDP block ACK message that includes a block ACK message bitmap with information per each access terminal in the "per-access terminal" portion of the NDP CTX message 1900. In some examples, the bitmap is present for a block ACK message and may not be present for an ACK message. The block ACK message information sent to each access terminal may be a self-contained message. That is, the BA information may include a message type identifier, a source address, or a destination address.

In some aspects, the NDP block ACK message may be an approximately immediate response to an MU data PPDU or to a trigger message, such as a multi-access terminal BAR, which may indicate the structure of the NDP BA response and the allocation of the NDP fields to different access terminals. Such a message may be a SIFS immediate response. In this case, the NDP block ACK message may not need to include certain information in the block ACK message, such as access terminal and access point identifier or type. In some examples, bandwidth or streams per access terminal may be allocated based on the access terminals' resource allocation for the soliciting PPDU. For example, the access terminals may use the same bandwidth or streams as the soliciting PPDU or use equal bandwidth allocation according to a number of access terminals identified in the soliciting PPDU. In some examples, as the NDP block ACK message may be an immediate response, the recipient is already well identified and the type of information carried by the NDP may already be known by the recipient of the NDP.

In some aspects, an access point 110 may initiate a CTX message transmission. In some aspects, an access point 110 may send a CTX message 402 in accordance with regular enhanced distribution channel access (EDCA) contention protocol. In some aspects, an access point 110 may send a CTX message 402 at scheduled times. In such an aspect, the scheduled times may be indicated by the access point 110 to the access terminals 120 by using a restricted access window (RAW) indication in a beacon which indicates a time reserved for a group of access terminals 120 to access the medium, a target wake time (TWT) agreement with each access terminal 120 which indicates to multiple access terminals 120 to be awake at the same time to take part in a UL-MU-MIMO transmission, or information in other fields. Outside the RAW and TWT an access terminal 102 may be allowed to transmit any message, or only a subset of messages (e.g., non-data frames). It may also be forbidden to transmit certain messages (e.g., it may be forbidden to transmit data frames). The access terminal 120 may also indicate that it is in sleep mode. One advantage to scheduling a CTX message is that multiple access terminals 120 may be indicated a same TWT or RAW time and may receive a transmission from an access point 110.

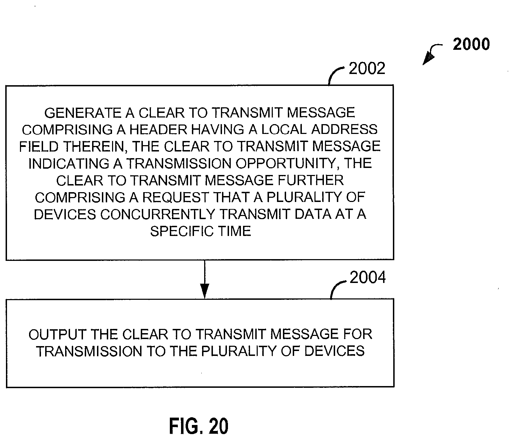

FIG. 20 is a flowchart 2000 of a method for wireless communication, useful for understanding the invention. A person having ordinary skill in the art will appreciate that the method may be implemented by any suitable device and system. Moreover, although the method of flowchart 2000 is described herein with reference to a particular order, in various aspects, blocks herein may be performed in a different order, or omitted, and additional blocks may be added.

Operation block 2002 includes generating a clear to transmit message comprising a header having a local address field therein, the clear to transmit message indicating a transmission opportunity, the clear to transmit message further comprising a request that a plurality of devices concurrently transmit data at a specific time. For example, as previously described in connection with any of FIGs. 14-16, the clear to transmit message 1400, 1500 may comprise a PV1 MAC header 1420, 1520 having a local address field 1404, 1504 that may be shorter in length than a full MAC address (e.g., 2 bytes versus 6 bytes). As previously described in connection with any of FIGs. 17-19, the NDP clear to transmit message 1700, 1800, 1900 may comprise a PHY header having a local address field 1714, 1814, 1914, 1924 that may also have the shortened length. This clear to transmit message further comprises a request that a plurality of devices (e.g., access terminals 120, see FIG. 1) concurrently transmit data (e.g., data 806a, 806b, 806c) at a specific time.

The flowchart 2000 may then advance to operational block 2004, which includes outputting the clear to transmit message for transmission to the plurality of devices.

In some aspects, an apparatus for wireless communication may perform some of the functions of flowchart 2000. The apparatus comprises means for generating a clear to transmit message comprising a header having a local address field therein. The clear to transmit message indicates a transmission opportunity. The clear to transmit message further comprises a request that a plurality of devices concurrently transmit data at a specific time. In some aspects, the means for generating a clear to transmit message may comprise the processing system 304 of the wireless device 302 of FIG. 3, for example. The apparatus may further comprise means for outputting the clear to transmit message for transmission to the plurality of devices. In some aspects, the means for outputting the clear to transmit message for transmission may include an interface comprising the processing system 304, and in some aspects, also at least a portion of the bus system 322.

In some aspects the apparatus may additionally include means for inserting a broadcast MAC address corresponding to the plurality of devices into the local address field, comprising the processing system 304, and in some aspects the memory 306, of the wireless device 302 of FIG. 3, for example, which may be configured to insert the unicast MAC address corresponding to one of the plurality of devices into the local address field. In some aspects, the apparatus may additionally include means for inserting a unicast MAC address corresponding to one of the plurality of devices into the local address field, comprising the processing system 304, and in some aspects the memory 306, of the wireless device 302 of FIG. 3, for example. In some aspects, the apparatus may additionally include means for generating a second address field in the header, comprising the processing system 304, and in some aspects the memory 306, of the wireless device 302 of FIG. 3, for example. In some aspects, the apparatus may additionally include means for generating the header without generating a duration field therein, comprising the processing system 304, and in some aspects the memory 306, of the wireless device 302 of FIG. 3, for example. In some aspects, the apparatus may additionally include means for generating a first signal field, a second signal field, and a third signal field in the physical layer header of the clear to transmit message and generating the local address field in one of the second signal field and the third signal field. This means may comprise the processing system 304, and in some aspects the memory 306, of the wireless device 302 of FIG. 3, for example.

A person, one having ordinary skill in the art would understand that information and messages can be represented using any of a variety of different technologies and techniques. For example, data, instructions, commands, information, messages, bits, symbols, and chips that can be referenced throughout the above description can be represented by voltages, currents, electromagnetic waves, magnetic fields or particles, optical fields or particles, or any combination thereof.

Various modifications to the aspects described in this disclosure can be readily apparent to those skilled in the art, and the generic principles defined herein can be applied to some aspects without departing from the spirit or scope of this disclosure. Thus, the disclosure is not intended to be limited to the aspects shown herein, but is to be accorded the widest scope consistent with the claims, the principles and the novel features disclosed herein. The word "exemplary" is used exclusively herein to mean "serving as an example, instance, or illustration." Any aspect described herein as "exemplary" is not necessarily to be construed as preferred or advantageous over some aspects.

Certain features that are described in this specification in the context of separate aspects also can be implemented in combination in a single aspect. Conversely, various features that are described in the context of a single aspect also can be implemented in multiple aspects separately or in any suitable sub-combination. Moreover, although features can be described above as acting in certain combinations and even initially claimed as such, one or more features from a claimed combination can in some cases be excised from the combination, and the claimed combination can be directed to a sub-combination or variation of a sub-combination.

The various operations of methods described above may be performed by any suitable means capable of performing the operations, such as various hardware and/or software component(s), circuits, and/or module(s). Generally, any operations illustrated in the Figures may be performed by corresponding functional means capable of performing the operations.

The various illustrative logical blocks, modules and circuits described in connection with the present disclosure may be implemented or performed with a general purpose processor, a digital signal processor (DSP), an application specific integrated circuit (ASIC), a field programmable gate array message (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

In one or more aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Thus, in some aspects computer readable medium may comprise non-transitory computer readable medium (e.g., tangible media). Combinations of the above should also be included within the scope of computer-readable media.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

Further, it should be appreciated that modules and/or other appropriate means for performing the methods and techniques described herein can be downloaded and/or otherwise obtained by an access terminal and/or base access terminal as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that an access terminal and/or base access terminal can obtain the various methods upon coupling or providing the storage means to the device. Moreover, any other suitable technique for providing the methods and techniques described herein to a device can be utilized.

While the foregoing is directed to aspects of the present disclosure, other and further aspects of the disclosure may be devised without departing from the basic scope thereof, and the scope thereof is determined by the claims that follow.

## Claims

1. A method for wireless communication performed by an access terminal (120a...i), comprising:
receiving, a clear to transmit message (1400) from an access point (110), wherein the clear to transmit message comprises a header (1420) having a local address field (1404) therein, the clear to transmit message (1400) indicating a transmission opportunity, the clear to transmit message (1400) further comprising a request that a plurality of devices concurrently transmit data at a specific time, the plurality of devices comprising the access terminal (120a...i),
the clear to transmit message further comprising a second address field (1406) in the header (1420), the second address field (1406) including a basic service set identifier of the access point (110).

2. The method of claim 1, further comprising prior to receiving the clear to transmit message:
transmitting a management message to the access point (110) indicating a request for enablement of the use of an uplink multi-user multiple input, multiple output, UL-MU-MIMO, feature; and
receiving a message granting the use of the UL-MU-MIMO feature.

3. The method of claim 1, further comprising:
decoding the clear to transmit message; and
performing pre-padding to gain more time to process data received via the clear to transmit message, wherein the pre-padding is in the form of aggregated MAC protocol data unit, A-MPDU, delimiters including a length=0 indication.

4. The method of claim 1, wherein the clear to transmit message further comprises a broadcast MAC address corresponding to the plurality of devices into the local address field (1404), or a unicast MAC address corresponding to the access terminal in the local address field (1404).

5. The method of claim 1, wherein the clear to transmit message further comprises the local address field (1404) having a length of 2 bytes.

6. The method of claim 1, wherein the header (1420) consists of a message control field (1402), the local address field (1404) and the second address field (1406).

7. The method of claim 1, wherein the clear to transmit message (1400) is a null data packet wherein the header of the clear to transmit message (1400) is a physical layer header, wherein a plurality of signal fields are in the physical layer header of the null data packet, the local address field (1404) being located in one of the plurality of signal fields.

8. The method of claim 1, wherein the header (1420) of the clear to transmit message (1400) is a MAC header.

9. A computer readable medium encoded thereon with instructions that when executed cause an access terminal to perform the method of wireless communication of any one claims 1 to 8.

10. An access terminal for wireless communication, comprising:
means for receiving, a clear to transmit message (1400) from an access point (110), wherein the clear to transmit message comprises a header (1420) having a local address field (1404) therein, the clear to transmit message (1400) indicating a transmission opportunity, the clear to transmit message (1400) further comprising a request that a plurality of devices concurrently transmit data at a specific time, the plurality of devices comprising the access terminal (120a...i),
the clear to transmit message further comprising a second address field (1406) in the header (1420), the second address field (1406) including a basic service set identifier of the access point (110).

11. The access terminal of claim 10, further comprising:
means for transmitting a management message to the access point (110) indicating a request for enablement of the use of an uplink multi-user multiple input, multiple output, UL-MU-MIMO, feature; and
means for receiving a message granting the use of the UL-MU-MIMO feature.

12. The access terminal of claim 10, further comprising:
means for decoding the clear to transmit message; and
means for performing pre-padding to gain more time to process data received via the clear to transmit message, wherein the pre-padding is in the form of aggregated MAC protocol data unit, A-MPDU, delimiters including a length=0 indication.

13. The access terminal of claim 10, wherein the clear to transmit message further comprises a broadcast MAC address corresponding to the plurality of devices into the local address field (1404), or a unicast MAC address corresponding to the access terminal in the local address field (1404).

14. The access terminal of claim 10, wherein the clear to transmit message (1400) is a null data packet and the header of the clear to transmit message (1400) is a physical layer header, wherein the clear to transmit message further comprises a plurality of signal fields in the physical layer header of the null data packet and the local address field (1404) in one of the plurality of signal fields.

15. The access terminal of claim 10, wherein the header (1420) of the clear to transmit message (1400) is a MAC header,

## Patentansprüche

1. Ein Verfahren für eine drahtlose Kommunikation, das durch ein Zugangsendgerät (120a...i) durchgeführt wird, aufweisend:
Empfangen einer Bereit-zum-Senden-Nachricht (1400) von einem Zugangspunkt (110), wobei die Bereit-zum-Senden-Nachricht einen Header (1420) mit einem darin enthaltenen Lokale-Adresse-Feld (1404) aufweist, wobei die Bereit-zum-Senden-Nachricht (1400) eine Sendegelegenheit angibt, wobei die Bereit-zum-Senden-Nachricht (1400) weiterhin eine Anfrage, dass eine Vielzahl von Geräten gleichzeitig Daten zu einer spezifischen Zeit senden, aufweist, wobei die Vielzahl von Geräten das Zugangsendgerät (120a...i) umfassen,
wobei die Bereit-zum-Senden-Nachricht weiterhin ein zweites Adressfeld (1406) in dem Header (1420) aufweist, wobei das zweite Adressfeld (1406) eine Basisdienstsatzkennung des Zugangspunkts (110) enthält.

2. Verfahren nach Anspruch 1, das weiterhin vor dem Empfangen der Bereit-zum-Senden-Nachricht aufweist:
Senden einer Verwaltungsnachricht an den Zugangspunkt (110), die eine Anfrage für das Ermöglichen der Verwendung einer Aufwärtsstrecke (Uplink bzw. UL)-Mehrbenutzer (Multi-User bzw. MU)-MIMO-Funktion angibt, und
Empfangen einer Nachricht, die die Verwendung der UL-MU-MIMO-Funktion gewährt.

3. Verfahren nach Anspruch 1, das weiterhin aufweist:
Decodieren der Bereit-zum-Senden-Nachricht, und
Durchführen eines Vor-Füllens, um mehr Zeit für das Verarbeiten von über die Bereit-zum-Senden-Nachricht empfangenen Daten zu gewinnen, wobei die Vor-Füllung die Form von Aggregierte-MAC-Protokolldateneinheit (A-MPDU)-Begrenzern einschließlich einer Länge=0-Angabe aufweist.

4. Verfahren nach Anspruch 1, wobei die Bereit-zum-Senden-Nachricht weiterhin eine Broadcast-MAC-Adresse in Entsprechung zu der Vielzahl von Geräten in dem Lokale-Adresse-Feld (1404) oder eine Unicast-MAC-Adresse in Entsprechung zu dem Zugangsendgerät in dem Lokale-Adresse-Feld (1404) aufweist.

5. Verfahren nach Anspruch 1, wobei in der Bereit-zum-Senden-Nachricht das Lokale-Adresse-Feld (1404) eine Länge von 2 Bytes aufweist.

6. Verfahren nach Anspruch 1, wobei der Header (1420) aus einem Nachrichtensteuerfeld (1402), dem Lokale-Adresse-Feld (1404) und dem zweiten Adressfeld (1406) besteht.

7. Verfahren nach Anspruch 1, wobei die Bereit-zum-Senden-Nachricht (1400) ein Nulldatenpaket ist, wobei der Header der Bereit-zum-Senden-Nachricht (1400) ein Physikalische-Schicht-Header ist, wobei eine Vielzahl von Signalfeldern in dem Physikalische-Schicht-Header des Nulldatenpakets enthalten sind, wobei das Lokale-Adresse-Feld (1404) in einem aus der Vielzahl von Signalfeldern angeordnet ist.

8. Verfahren nach Anspruch 1, wobei der Header (1420) der Bereit-zum-Senden-Nachricht (1400) ein MAC-Header ist.

9. Ein computerlesbares Medium mit darauf codierten Befehlen, die bei einer Ausführung ein Zugangsendgerät veranlassen zum Durchführen des Verfahrens für eine drahtlose Kommunikation gemäß einem der Ansprüche 1 bis 8.

10. Ein Zugangsendgerät für eine drahtlose Kommunikation, aufweisend:
Mittel zum Empfangen einer Bereit-zum-Senden-Nachricht (1400) von einem Zugangspunkt (110), wobei die Bereit-zum-Senden-Nachricht einen Header (1420) mit einem darin enthaltenen Lokale-Adresse-Feld (1404) aufweist, wobei die Bereit-zum-Senden-Nachricht (1400) eine Sendegelegenheit angibt, wobei die Bereit-zum-Senden-Nachricht (1400) weiterhin eine Anfrage, dass eine Vielzahl von Geräten gleichzeitig Daten zu einer spezifischen Zeit senden, aufweist, wobei die Vielzahl von Geräten das Zugangsendgerät (120a...i) umfassen,
wobei die Bereit-zum-Senden-Nachricht weiterhin ein zweites Adressfeld (1406) in dem Header (1420) aufweist, wobei das zweite Adressfeld (1406) eine Basisdienstsatzkennung des Zugangspunkts (110) enthält.

11. Zugangsendgerät nach Anspruch 10, das weiterhin aufweist:
Mittel zum Senden einer Verwaltungsnachricht an den Zugangspunkt (110), die eine Anfrage für das Ermöglichen der Verwendung einer Aufwärtsstrecke (Uplink bzw. UL)-Mehrbenutzer (Multi-User bzw. MU)-MIMO-Funktion angibt, und
Mittel zum Empfangen einer Nachricht, die die Verwendung der UL-MU-Funktion gewährt.

12. Zugangsendgerät nach Anspruch 10, das weiterhin aufweist:
Mittel zum Decodieren der Bereit-zum-Senden-Nachricht, und
Mittel zum Durchführen eines Vor-Füllens, um mehr Zeit für das Verarbeiten von über die Bereit-zum-Senden-Nachricht empfangenen Daten zu gewinnen, wobei die Vor-Füllung die Form von Aggregierte-MAC-Protokolldateneinheit (A-MPDU)-Begrenzern einschließlich einer Länge=0-Angabe aufweist.

13. Zugangsendgerät nach Anspruch 10, wobei die Bereit-zum-Senden-Nachricht weiterhin eine Broadcast-MAC-Adresse in Entsprechung zu der Vielzahl von Geräten in dem Lokale-Adresse-Feld (1404) oder eine Unicast-MAC-Adresse in Entsprechung zu dem Zugangsendgerät in dem Lokale-Adresse-Feld (1404) aufweist.

14. Zugangsendgerät nach Anspruch 10, wobei die Bereit-zum-Senden-Nachricht (1400) ein Nulldatenpaket ist und der Header der Bereit-zum-Senden-Nachricht (1400) ein Physikalische-Schicht-Header ist, wobei die Bereit-zum-Senden-Nachricht weiterhin eine Vielzahl von Signalfeldern in dem Physikalische-Schicht-Header des Nulldatenpakets aufweist und das Lokale-Adresse-Feld (1404) in einem aus der Vielzahl von Signalfeldern angeordnet ist.

15. Zugangsendgerät nach Anspruch 10, wobei der Header (1420) der Bereit-zum-Senden-Nachricht (1400) ein MAC-Header ist.

## Revendications

1. Procédé de communication sans fil réalisé par un terminal d'accès (120a...i), comprenant :
la réception d'un message d'autorisation d'émission (1400) en provenance d'un point d'accès (110), dans lequel le message d'autorisation d'émission comprend un en-tête (1420) incluant un champ d'adresse locale (1404), le message d'autorisation d'émission (1400) indiquant une opportunité d'émission, le message d'autorisation d'émission (1400) comprenant en outre une requête selon laquelle une pluralité de dispositifs émettent simultanément des données à un moment donné, la pluralité de dispositifs comprenant le terminal d'accès (120a...i),
le message d'autorisation d'émission comprenant en outre un deuxième champ d'adresse (1406) dans l'en-tête (1420), le deuxième champ d'adresse (1406) comportant un identifiant d'ensemble de services de base du point d'accès (110).

2. Procédé selon la revendication 1, comprenant en outre, avant de recevoir le message d'autorisation d'émission :
l'émission d'un message de gestion au point d'accès (110) indiquant une requête d'activation de l'utilisation d'une fonctionnalité de liaison montante à plusieurs entrées et plusieurs sorties, UL-MU-MIMO ; et
la réception d'un message autorisant l'utilisation de la fonctionnalité UL-MU-MIMO.

3. Procédé selon la revendication 1, comprenant en outre :
le décodage du message d'autorisation d'émission ; et
la mise en œuvre d'un pré-remplissage pour gagner plus de temps pour traiter des données reçues par l'intermédiaire du message d'autorisation d'émission, dans lequel le pré-remplissage est effectué sous la forme de délimiteurs d'unité de données de protocole MAC agrégées, A-MPDU, comportant une indication de longueur = 0.

4. Procédé selon la revendication 1, dans lequel le message d'autorisation d'émission comprend en outre une adresse MAC de diffusion correspondant à la pluralité de dispositifs dans le champ d'adresse locale (1404), ou une adresse MAC de monodiffusion correspondant au terminal d'accès dans le champ d'adresse locale (1404).

5. Procédé selon la revendication 1, dans lequel le message d'autorisation d'émission comprend en outre le champ d'adresse locale (1404) qui a une longueur de 2 octets.

6. Procédé selon la revendication 1, dans lequel l'en-tête (1420) est constitué d'un champ de commande de message (1402), du champ d'adresse locale (1404) et du deuxième champ d'adresse (1406).

7. Procédé selon la revendication 1, dans lequel le message d'autorisation d'émission (1400) est un paquet de données nul dans lequel l'en-tête du message d'autorisation d'émission (1400) est un en-tête de couche physique, dans lequel une pluralité de champs de signal se trouvent dans l'en-tête de couche physique du paquet de données nul, le champ d'adresse locale (1404) étant situé dans l'un de la pluralité de champs de signal.

8. Procédé selon la revendication 1, dans lequel l'en-tête (1420) du message d'autorisation d'émission (1400) est un en-tête MAC.

9. Support lisible par ordinateur sur lequel sont codées des instructions qui, lorsqu'elles sont exécutées, amènent un terminal d'accès à mettre en œuvre le procédé de communication sans fil selon l'une quelconque des revendications 1 à 8.

10. Terminal d'accès destiné à une communication sans fil, comprenant :
des moyens pour recevoir un message d'autorisation d'émission (1400) en provenance d'un point d'accès (110), dans lequel le message d'autorisation d'émission comprend un en-tête (1420) incluant un champ d'adresse locale (1404), le message d'autorisation d'émission (1400) indiquant une opportunité d'émission, le message d'autorisation d'émission (1400) comprenant en outre une requête selon laquelle une pluralité de dispositifs émettent simultanément des données à un moment donné, la pluralité de dispositifs comprenant le terminal d'accès (120a...i),
le message d'autorisation d'émission comprenant en outre un deuxième champ d'adresse (1406) dans l'en-tête (1420), le deuxième champ d'adresse (1406) comportant un identifiant d'ensemble de services de base du point d'accès (110).

11. Terminal d'accès selon la revendication 10, comprenant en outre :
des moyens pour émettre un message de gestion au point d'accès (110) indiquant une requête d'activation de l'utilisation d'une fonctionnalité de liaison montante à plusieurs entrées et plusieurs sorties, UL-MU-MIMO ; et
des moyens pour recevoir un message autorisant l'utilisation de la fonctionnalité UL-MU-MIMO.

12. Terminal d'accès selon la revendication 10, comprenant en outre :
des moyens pour décoder le message d'autorisation d'émission ; et
des moyens pour mettre en œuvre d'un pré-remplissage pour gagner plus de temps pour traiter les données reçues par l'intermédiaire du message d'autorisation d'émission, dans lequel le pré-remplissage est effectué sous la forme de délimiteurs d'unité de données de protocole MAC agrégées, A-MPDU, comportant une indication de longueur = 0.

13. Terminal d'accès selon la revendication 10, dans lequel le message d'autorisation d'émission comprend en outre une adresse MAC de diffusion correspondant à la pluralité de dispositifs dans le champ d'adresse locale (1404), ou une adresse MAC de monodiffusion correspondant au terminal d'accès dans le champ d'adresse locale (1404).

14. Terminal **d'accès** selon la revendication 10, dans lequel le message d'autorisation d'émission (1400) est un paquet de données nul et l'en-tête du message d'autorisation d'émission (1400) est un en-tête de couche physique, dans lequel le message d'autorisation d'émission comprend en outre une pluralité de champs de signal dans l'en-tête de couche physique du paquet de données nul et le champ d'adresse locale (1404) dans l'un de la pluralité de champs de signal.

15. Terminal d'accès selon la revendication 10, dans lequel l'en-tête (1420) du message d'autorisation d'émission (1400) est un en-tête MAC.
